# EUROPEAN PATENT SPECIFICATION

(11) **EP 4 290 877 B1**
(45) Date of publication and mention of the grant of the patent: **11.02.2026**
(21) Application number: 23753785.7
(22) Date of filing: 06.03.2023
(51) Int. Cl.: H04N 23/68, H04N 23/57, H04N 23/55, H04N 23/667, G03B 5/00, H04M 1/02, H04N 23/63, H04N 23/698, H04N 23/60, G03B 30/00

(54) **ELECTRONIC DEVICE COMPRISING FLEXIBLE DISPLAY AND OPERATING METHOD THEREOF**
ELEKTRONISCHE VORRICHTUNG MIT FLEXIBLER ANZEIGE UND VERFAHREN ZUM BETRIEB DAVON
DISPOSITIF ÉLECTRONIQUE COMPRENANT UNE UNITÉ D'AFFICHAGE FLEXIBLE ET SON PROCÉDÉ DE FONCTIONNEMENT

(30) Priority: 19.04.2022 KR 20220048271; 30.06.2022 KR 20220080575
(43) Date of publication of application: 13.12.2023
(73) Proprietor: Samsung Electronics Co., Ltd., Suwon-si, Gyeonggi-do 16677 (KR)
(72) Inventor: LIM, Yujin, Suwon-si, Gyeonggi-do 16677 (KR); JEON, Wooram, Suwon-si, Gyeonggi-do 16677 (KR); JI, Youngmin, Suwon-si, Gyeonggi-do 16677 (KR)
(74) Representative: Gulde & Partner
(86) International application number: PCT/KR2023/003002
(87) International publication number: WO 2023/204437

(56) References cited:
- WO-A1-2021/085658
- CN-A- 113 114 949
- JP-A- 2008 177 908
- KR-A- 20090 022 054
- KR-A- 20110 066 653
- KR-A- 20150 006 191
- KR-A- 20210 089 377
- US-A1- 2015 009 129

## Description

### BACKGROUND

### 1. Field

The disclosure relates to an electronic device including a flexible display, and a method of operating the electronic device.

### 2. Description of Related Art

The development of display technology has accelerated the introduction of an electronic device with a flexible display. The flexible display may be a display that may be bent. The flexible display may be formed of a flexible material (e.g., a plastic film) to have the flexibility that enables the flexible display to be folded and unfolded. The flexible display may also be implemented as a rollable display.

An electronic device with a flexible display may perform digital image stabilization (DIS) and optical image stabilization (OIS) while performing photographing using a camera.

CN 113114949 A discloses an anti-shake shooting method applied to an electronic device. The electronic device includes a housing assembly, a flexible display screen, and a camera. The housing assembly includes a first housing and a second housing that are slidably connected. The flexible display One end of the screen is connected to the first housing, and the other end is arranged in the housing assembly, the second housing can slide relative to the first housing to adjust the display area of the electronic device, and the camera is mounted on the second shell and capable of following the second shell to slide relative to the first shell.

KR 20210089377 A discloses a foldable electronic device including a foldable housing foldable along at least one axis, a first display disposed on a first surface of the foldable housing, and a second surface of the foldable housing a second display, a first camera, a second camera, at least one sensor, a memory, and the first display, the second display, the first camera, the second camera, the memory, and the at least one sensor disposed in a processor operatively connected to a processor configured to provide, in a folded state, a first preview to the first display using the first camera, and an area for the first preview through the first display Receive a setting input, and after receiving the area setting input, detect the unfolding of the foldable electronic device using the at least one sensor, and in the unfolded state, input the area setting using the second camera It may be set to provide a second preview corresponding to , through the second display.

US 2015/009129 A1 discloses a method for operating an electronic device, which includes detecting bending of a flexible display, deter mining bending information corresponding to the bending, obtaining a plurality of images according to the detected bending information, and generating a panorama image by combining the obtained plurality of images. Thus, an intuitive user interface using the flexible display can be provided.

### SUMMARY

A user may move (e.g., walk and run) when photographing is being performed by an electronic device, and the electronic device may move due to a movement of the user. In some cases, a motion that is difficult to correct through digital image stabilization (DIS) and optical image stabilization (OIS) may occur.

Embodiments may provide an electronic device that may perform an image stabilization (IS) by expanding or reducing a rollable display during photographing using a camera. The present invention is defined by the appended set of claims. Preferred embodiments are defined by the dependent claims.

The technical goals to be achieved are not limited to those described above, and other technical goals not mentioned above are clearly understood by one of ordinary skill in the art from the following description.

According to an embodiment, an electronic device includes a camera configured to perform photographing, a flexible display, a motor configured to expand or retract the flexible display (e.g., through a rotation), a motor driver circuit configured to control the motor (e.g., for the rotation of the motor), and a processor electrically connected with the camera, the flexible display; and the motor driver circuit. The processor is configured to determine a direction and a movement value in which the electronic device moves when there is a shake of the electronic device. The processor is configured to determine whether the determined movement value is within a predetermined range. The processor is configured to determine control information for controlling the motor driver circuit based on the determined movement value and the determined direction when the determined movement value is within the predetermined range. The processor is configured to control the motor driver circuit based on the determined control information so that an image stabilization (IS) is performed based on an expansion or retraction of the flexible display.

According to an embodiment, an electronic device includes a camera configured to perform photographing, a flexible display, a motor configured to change a size of a viewable area of the flexible display (e.g., through a rotation), a motor driver circuit configured to control the motor (e.g., for the rotation of the motor), and a processor. The processor is configured to determine first control information so that the viewable area has a first length before the camera starts photographing; control the motor driver circuit based on the determined first motor control information. The processor is configured to determine a motion amount and a motion direction of the electronic device during the photographing with the camera. The processor is configured to determine whether the determined motion amount is within a predetermined range. The processor is configured to when the determined motion amount is determined to be within the predetermined range and when the motion direction is determined as a first direction. The processor is configured to determine second control information based on the first direction and the determined motion amount so that the viewable area is retracted. The processor is configured to control the motor driver circuit based on the determined second control information; when the motion direction is determined as a second direction. The processor is configured to determine third control information based on the determined motion amount and the second direction so that the viewable area expands. The processor is configured to control the motor driver circuit based on the determined third control information.

According to an embodiment, a method of operating an electronic device includes performing photographing using a camera, determining a direction and a movement value in which the electronic device moves when there is a shake of the electronic device during the photographing with the camera, determining whether the determined movement value is within a predetermined range, determining control information for controlling a motor driver circuit based on the determined movement value and the determined direction when the determined movement value is within the predetermined range, the motor being configured to expand or retract a flexible display (e.g., through a rotation), and controlling a motor driver circuit based on the determined control information so that an IS is performed based on an expansion or retraction of the flexible display. For example, a further step of performing at least one of a DIS or an OIS, when the determined motion amount is less than the predetermined range, may be performed.

According to embodiments, an electronic device may perform an IS by expanding or reducing a rollable display when the electronic device moves out of a predetermined level during photographing in various photographing modes, thereby obtaining a high-quality image and video.

In addition, various effects directly or indirectly ascertained through the present disclosure may be provided.

### BRIEF DESCRIPTION OF THE DRAWINGS

The above and other aspects, features, and advantages of certain embodiments of the present disclosure will be more apparent from the following detailed description, taken in conjunction with the accompanying drawings, in which:
FIG. 1 is a block diagram illustrating an electronic device in a network environment according to an embodiment;
FIGS. 2A and 2B are front perspective views illustrating a first state and a second state of an electronic device, respectively, according to embodiments, and FIGS. 2C and 2D are rear perspective views illustrating the first state and the second state of the electronic device, respectively, according to embodiments;
FIG. 3 is an exploded perspective view of an electronic device according to an embodiment;
FIG. 4 is a diagram illustrating an example of an expansion and retraction of an electronic device according to an embodiment;
FIGS. 5A to 5C are diagrams illustrating an electronic device according to embodiments;
FIGS. 6A to 8B are diagrams illustrating an image stabilization (IS) in a panorama photographing mode of an electronic device according to embodiments;
FIGS. 9 to 11B are diagrams illustrating an IS in a moving image photographing mode of an electronic device according to embodiments; and
FIGS. 12 to 16B are diagrams illustrating an IS in a hyperlapse mode of an electronic device according to embodiments.

### DETAILED DESCRIPTION

Hereinafter, embodiments will be described in detail with reference to the accompanying drawings. When describing the embodiments with reference to the accompanying drawings, like reference numerals refer to like components and a repeated description related thereto will be omitted.

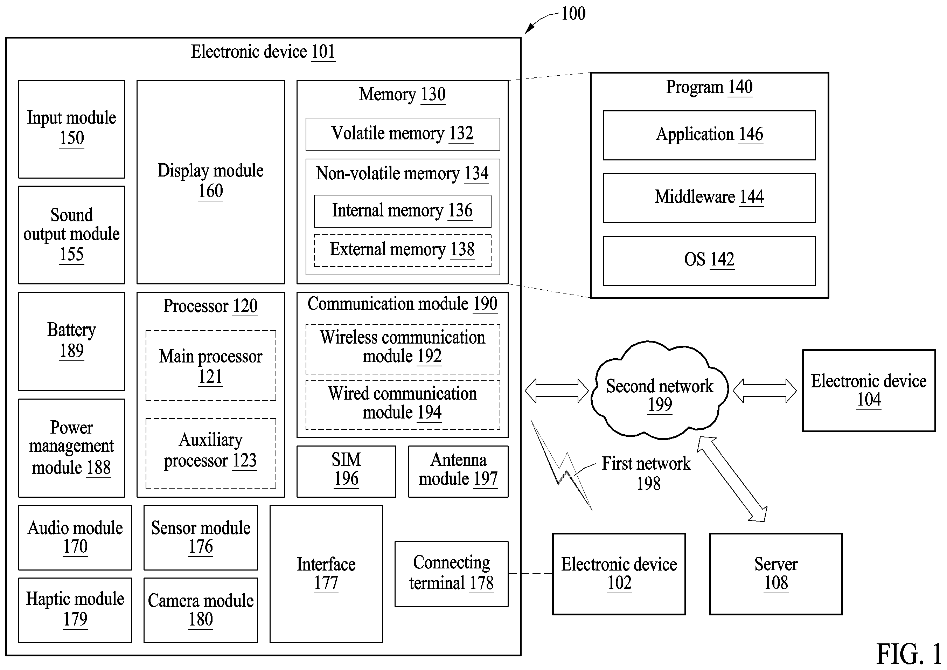

FIG. 1 is a block diagram illustrating an electronic device 101 in a network environment 100 according to embodiments. Referring to FIG. 1, the electronic device 101 in the network environment 100 may communicate with an electronic device 102 via a first network 198 (e.g., a short-range wireless communication network), or communicate with at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one (e.g., the connecting terminal 178) of the above components may be omitted from the electronic device 101, or one or more other components may be added in the electronic device 101. In some embodiments, some (e.g., the sensor module 176, the camera module 180, or the antenna module 197) of the components may be integrated as a single component (e.g., the display module 160).

The processor 120 may execute, for example, software (e.g., a program 140) to control at least one other component (e.g., a hardware or software component) of the electronic device 101 connected to the processor 120, and may perform various data processing or computation. According to an embodiment, as at least a portion of data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)) or an auxiliary processor 123 (e.g., a graphics processing unit (GPU), a neural processing unit (NPU), an image signal processor (ISP), a sensor hub processor, or a communication processor (CP)) that is operable independently of, or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is in an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specified for processing of an artificial intelligence (AI) model. The Al model may be generated by machine learning. Such learning may be performed by, for example, the electronic device 101 in which an Al model is executed, or performed via a separate server (e.g., the server 108). A learning algorithm may include, but is not limited to, for example, supervised learning, unsupervised learning, semi-supervised learning, or reinforcement learning. The Al model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, or a combination of two or more thereof, but is not limited thereto. The Al model may additionally or alternatively include a software structure other than the hardware structure.

The memory 130 may store a variety of data used by at least one component (e.g., the processor 120 or the sensor module 176) of the electronic device 101. The data may include, for example, software (e.g., the program 140) and input data or output data for a command related thereto. The memory 130 may include the volatile memory 132 or the non-volatile memory 134.

The program 140 may be stored as software in the memory 130, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing record. The receiver may be used to receive an incoming call. According to an embodiment, the receiver may be implemented separately from the speaker or as a portion of the speaker.

The display module 160 may visually provide information to the outside (e.g., a user) of the electronic device 101. The display module 160 may include, for example, a control circuit for controlling a display, a hologram device, or a projector and control circuitry to control a corresponding one of the display, the hologram device, and the projector. According to an embodiment, the display module 160 may include a touch sensor adapted to sense a touch, or a pressure sensor adapted to measure an intensity of a force incurred by the touch. The display module 160 may be implemented with, for example, a foldable structure and/or a rollable structure. For example, a size of a display screen of the display module 160 may be reduced when folded and expanded when unfolded.

The audio module 170 may convert a sound into an electric signal and vice versa. According to an embodiment, the audio module 170 may obtain the sound via the input module 150 or output the sound via the sound output module 155 or an external electronic device (e.g., an electronic device 102 such as a speaker or headphones) directly or wirelessly connected to the electronic device 101.

The sensor module 176 may detect an operational state (e.g., power or temperature) of the electronic device 101 or an environmental state (e.g., a state of a user) external to the electronic device 101, and generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or an electrical stimulus which may be recognized by a user via his or her tactile sensation or kinesthetic sensation. According to an embodiment, the haptic module 179 may include, for example, a motor, a piezoelectric element, or an electric stimulator.

The camera module 180 may capture a still image and a moving image (or video). According to an embodiment, the camera module 180 may include one or more lenses, image sensors, ISPs, or flashes.

The power management module 188 may manage power supplied to the electronic device 101. According to an embodiment, the power management module 188 may be implemented as, for example, at least a portion of a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that operate independently of the processor 120 (e.g., an application processor) and support direct (e.g., wired) communication or wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and a next-generation communication technology, e.g., a new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beam-forming, or a large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., an external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or power may be transmitted or received between the communication module 190 and the external electronic device via the at least one selected antenna. According to an embodiment, another component (e.g., a radio frequency integrated circuit (RFIC)) other than the radiating element may be additionally formed as a part of the antenna module 197.

According to an embodiment, the antenna module 197 may form a mmWave antenna module. According to an embodiment, the mmWave antenna module may include a PCB, an RFIC disposed on a first surface (e.g., a bottom surface) of the PCB or adjacent to the first surface and capable of supporting a designated high-frequency band (e.g., a mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of the same type as or a different type from the electronic device 101. According to an embodiment, all or some of operations to be executed by the electronic device 101 may be executed at one or more external electronic devices (e.g., the external devices 102 and 104, and the server 108). For example, if the electronic device 101 needs to perform a function or a service automatically, or in response to a request from a user or another device, the electronic device 101, instead of, or in addition to, executing the function or the service, may request one or more external electronic devices to perform at least portion of the function or the service. The one or more external electronic devices receiving the request may perform the at least part of the function or the service requested, or an additional function or an additional service related to the request, and may transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or MEC. In an embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., a smart home, a smart city, a smart car, or healthcare) based on 5G communication technology or loT-related technology.

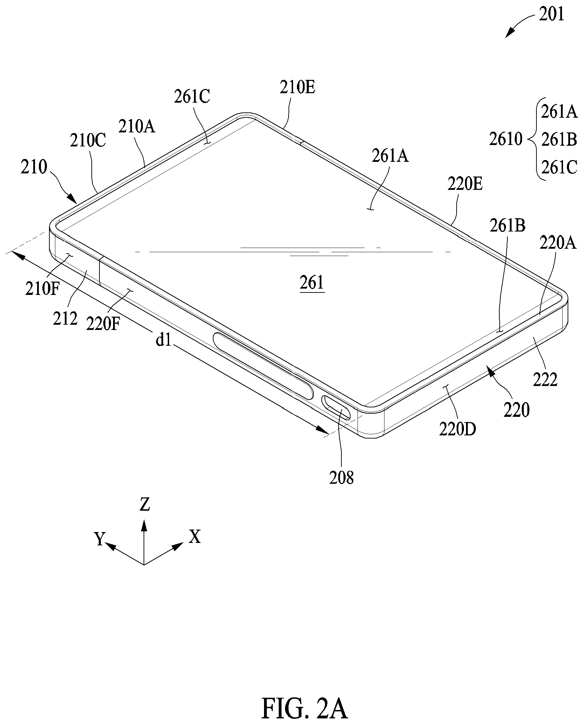

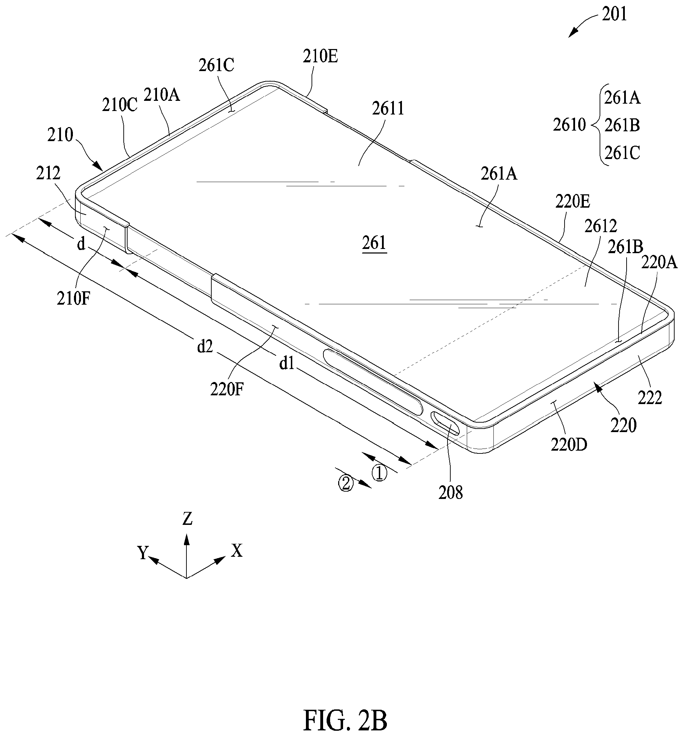

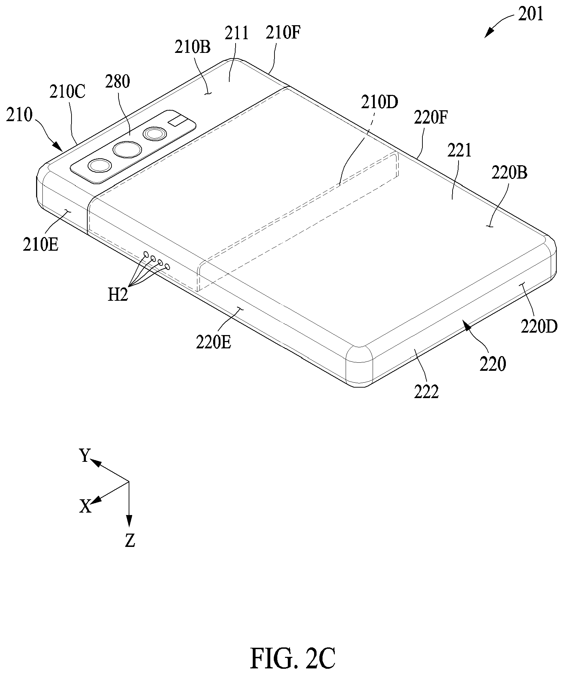

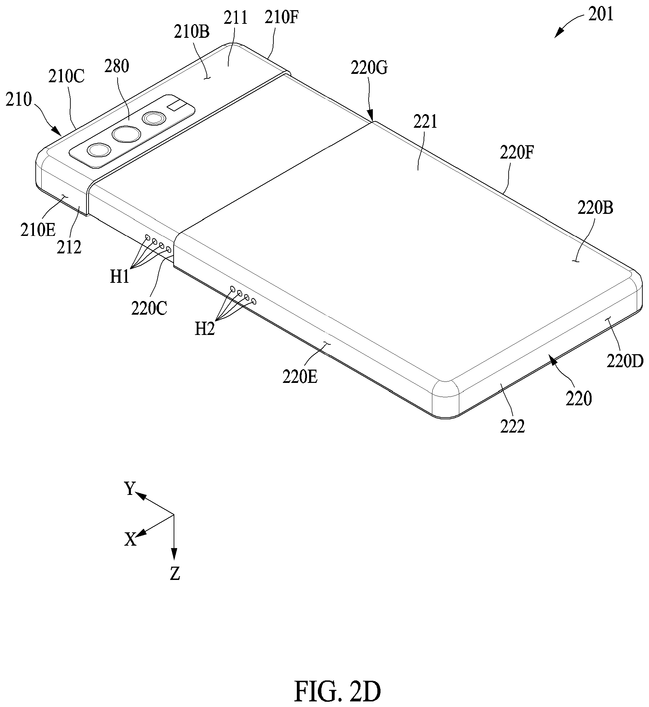

FIGS. 2A and 2B are front perspective views illustrating a first state and a second state of an electronic device, respectively, according to embodiments, and FIGS. 2C and 2D are rear perspective views illustrating the first state and the second state of the electronic device, **respectively,** according to embodiments.

Referring to FIGS. 2A to 2D, an electronic device 201 according to an embodiment may include housings 210 and 220 configured to form an external appearance of the electronic device 201 and accommodate components therein. In an embodiment, the housings 210 and 220 may include a first housing 210 and a second housing 220 that are movably coupled to each other. In an embodiment, the first housing 210 may be connected to the second housing 220 to slide relative to the second housing 220. For example, the first housing 210 may be connected to the second housing 220 to move relative to the second housing 220 in a first moving direction (e.g., a +Y direction) indicated by ① or in a second moving direction (e.g., a -Y direction) indicated by ② opposite the first moving direction. Hereinafter, a movement of the first housing 210 relative to the second housing 220 is described in embodiments disclosed in the disclosure, to describe a relative movement between the first housing 210 and the second housing 220. In another example, the second housing 220 moves relative to the first housing 210.

In an embodiment, according to a movement of the first housing 210 relative to the second housing 220, a state of the electronic device 201 may be changed between the first state and the second state. In an embodiment, the electronic device 201 may have a retracted form in the first state and an expanded form in the second state. The electronic device 201 may be used in the first state or the second state, or may be used in an intermediate state between the first state and the second state.

In an embodiment, the first housing 210 may include a first surface 210A (e.g., a first front surface), a second surface 210B (e.g., a first rear surface) opposite to the first surface 210A, a first side surface 210C facing a first lateral direction (e.g., a +Y direction) and disposed between the first surface 210A and the second surface 210B, a second side surface 210D facing a second lateral direction (e.g., a -Y direction) opposite to the first lateral direction and disposed between the first surface 210A and the second surface 210B, a third side surface 210E facing a third lateral direction (e.g., an + X direction) crossing the first lateral direction and disposed between the first surface 210A and the second surface 210B, and a fourth side surface 210F facing a fourth lateral direction (e.g., a -X direction) opposite to the third lateral direction and disposed between the first surface 210A and the second surface 210B. In an embodiment, the first housing 210 may include a first plate 211, and a first side frame 212 that substantially extends in a thickness direction (e.g., a Z-axis direction) along an edge of the first plate 211. In an embodiment, the first plate 211 may form the second surface 210B, and the first side frame 212 may form the first side surface 210C, the second side surface 210D, the third side surface 210E, and the fourth side surface 210F. In an embodiment, the first plate 211 and the first side frame 212 may be integrally formed, or may be separately formed to be coupled to each other.

In an embodiment, the second housing 220 may include a third surface 220A (e.g., a second front surface), a fourth surface 220B (e.g., a second rear surface) opposite to the third surface 220A, a fifth side surface 220C facing the first lateral direction (e.g., the +Y direction) and disposed between the third surface 220A and the fourth surface 220B, a sixth side surface 220D facing the second lateral direction (e.g., the -Y direction) opposite to the first lateral direction and disposed between the third surface 220A and the fourth surface 220B, a seventh side surface 220E facing the third lateral direction (e.g., the + X direction) crossing the first lateral direction and disposed between the third surface 220A and the fourth surface 220B, and an eighth side surface 220F facing the fourth lateral direction (e.g., the -X direction) opposite to the third lateral direction and disposed between the third surface 220A and the fourth surface 220B. In an embodiment, the second housing 220 may include a second plate 221, and a second side frame 222 that substantially extends in the thickness direction (e.g., the Z-axis direction) along an edge of the second plate 221. In an embodiment, the second plate 221 may form the fourth surface 220B, and the second side frame 222 may form the fifth side surface 220C, the sixth side surface 220D, the seventh side surface 220E, and the eighth side surface 220F. In an embodiment, the second plate 221 and the second side frame 222 may be integrally formed, or may be separately formed to be coupled to each other.

In an embodiment, the first housing 210 and the second housing 220 may form a front surface (e.g., a surface facing the +Z direction) of the electronic device 201 based on the first surface 210A and the third surface 220A, and form a rear surface (e.g., a surface facing the -Z direction) of the electronic device 201 based on the second surface 210B and the fourth surface 220B. In an embodiment, the second housing 220 may include an open portion 220G in which at least a portion of the fifth side surface 220C is opened such that the first housing 210 may be partially inserted into the open portion 220G to be movable. However, this is merely an example. In another example, the first housing 210 may include an open portion in which at least a portion of the second side surface 210D is opened, and the second housing 220 may also be partially movably inserted into the first housing 210 through the open portion of the second side surface 210D.

In an embodiment, the electronic device 201 may include a display 261 (e.g., a flexible display or a rollable display) configured to display visual information. In an embodiment, the display 261 may be visually exposed to the outside of the electronic device 201 through a display area 2610. In an embodiment, the display area 2610 may include a first area 261A provided parallel to the first surface 210A and the third surface 220A, a second area 261B connected to one end of the first area 261A, and a third area 261C connected to the other end of the first area 261A. The second area 261B and the third area 261C may be provided on opposite sides based on the first area 261A. In an embodiment, each of the second area 261B and the third area 261C may have a curved surface that may be flexibly bent. In an embodiment, the display 261 may display a screen on the display area 2610. The display 261 may display a single connected screen using the entire display area 2610, or display a screen using only a portion of the display area 2610. In an embodiment, the display 261 may display a plurality of screens that are partially **classified** through the display area 2610. For example, the display 261 may display a single screen on the first area 261A, and display a screen different from the screen of the first area 261A on the second area 261B and/or the third area 261C.

In an embodiment, the display 261 may include a plane portion 2611 that forms at least a portion of the display area 2610, and a rolling portion 2612 (or a bending portion) that extends from the plane portion 2611. The rolling portion 2612 may be drawn out of the electronic device 201 or inserted into the electronic device 201 according to the movement of the first housing 210 relative to the second housing 220. The rolling portion 2612 drawn out of the electronic device 201 may be exposed to the outside of the electronic device 201 and may form the display area 2610 together with the plane portion 2611. An area of the display area 2610 may change according to a degree by which the rolling portion 2612 is drawn out of the electronic device 201.

In an embodiment, the area of the display area 2610 (e.g., the first area 261A, the second area 261B, and the third area 261C) of the display 261 may change according to a change in the state of the electronic device 201. In an embodiment, the display area 2610 of the display 261 may have a first area (e.g., a minimum area) minimally retracted in the first state (e.g., a retracted state as shown in FIG. 2A) of the electronic device 201, and may have a second area (e.g., a maximum area) that is maximally increased in the second state (e.g., an extended state as shown in FIG. 2B) of the electronic device 201. When the electronic device 201 is in a state between the first state and the second state, the area of the display area 2610 of the display 261 may be increased or retracted based on the state of the electronic device 201. For example, when the first housing 210 moves a predetermined length d in the first moving direction indicated by ① with respect to the second housing 220 in a process of changing the state from the first state to the second state, the display area 2610 may be expanded while a length of the display area 2610 parallel to the first moving direction indicated by ① changes from a first length d1 to a second length d2 increased by the predetermined length d. Similarly, when the first housing 210 moves **the predetermined** length d in the second moving direction indicated by ② with respect to the second housing 220 in a process of changing the state from the second state to the first state, the display area 2610 may be retracted while the length of the display area 2610 parallel to the second moving direction indicated by ② changes from the second length d2 to the first length d1 reduced by the predetermined length d. In addition, during a change in the state of the electronic device 201 between the first state and the second state, a size of each of the second area 261B and the third area 261C may substantially remain unchanged.

In an embodiment, the electronic device 201 may include at least one of an input module (e.g., the input module 150 of FIG. 1), a sound output module (e.g., the sound output module 155 of FIG. 1), a camera module 280 (e.g., the camera module 180 of FIG. 1), or a connector port 208.

In an embodiment, the input module may receive an input signal according to a user's manipulation. The input module may be disposed on, for example, the seventh side surface 220E or the eighth side surface 220F of the second housing 220. It should be noted that a position in which the input module is disposed is not limited thereto. For example, the input module may also be disposed in the first housing 210.

In an embodiment, at least one of the first housing 210 or the second housing 220 may include a hole through which sound generated by the sound output module is radiated to the outside. For example, the first housing 210 may include a first hole H1 that is covered by the second housing 220 when the electronic device is in the first state and that is exposed to the outside when the electronic device is in the second state. For example, the second housing 220 may include a second hole H2 formed on at least one of the sixth side surface 220D, the seventh side surface 220E, or the eighth side surface 220F. For example, the first hole H1 and the second hole H2 may be substantially aligned with each other when the electronic device 201 is in the first state.

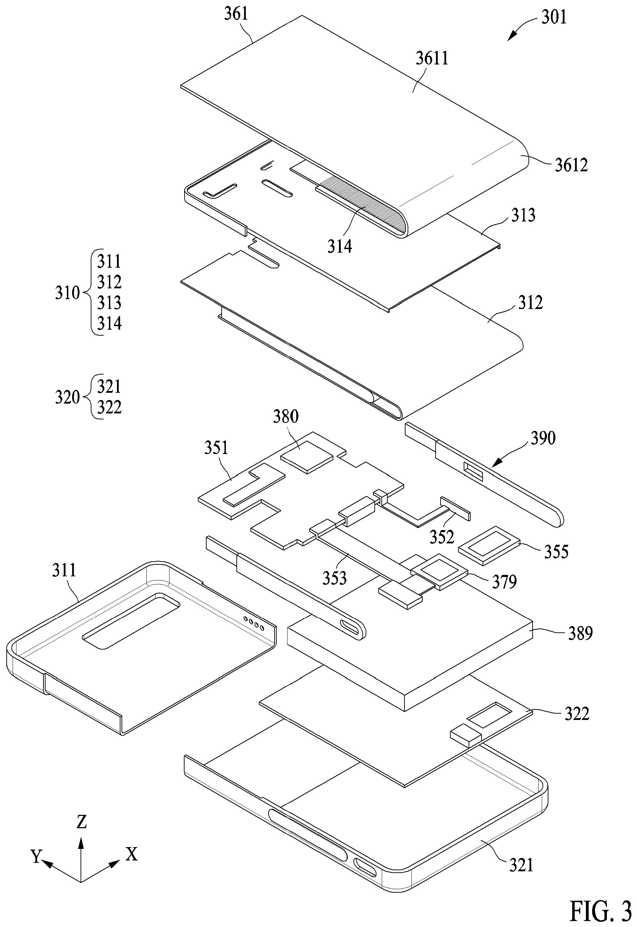

FIG. 3 is an exploded perspective view of an electronic device according to an embodiment.

Referring to FIG. 3, an electronic device 301 (e.g., the electronic device 101 of FIG. 1, and the electronic device 201 of FIGS. 2A to 2D) according to an embodiment may include a first housing 310 (e.g., the first housing 210 of FIG. 2B), a second housing 320 (e.g., the second housing 220 of FIG. 2B), and a display 361 (e.g., the display 261 of FIG. 2B).

In an embodiment, the electronic device 301 may include an actuator 390 configured to move the first housing 310 and the second housing 320 relative to each other. In an embodiment, the actuator 390 may be disposed in the first housing 310 or the second housing 320. The actuator 390 may provide power required to move the first housing 310 relative to the second housing 320. The actuator 390 may include, for example, an electric motor, a hydraulic motor, and any other motors suitable for generating power.

In an embodiment, the electronic device 301 may include a sound output module 355 (e.g., the sound output module 155 of FIG. 1). In an embodiment, the sound output module 355 may be disposed in the first housing 310 or the second housing 320.

In an embodiment, the electronic device 301 may include a haptic module 379 (e.g., the haptic module 179 of FIG. 1). The haptic module 379 may include, for example, a vibrator configured to generate vibrations. In an embodiment, the haptic module 379 may be disposed in the second housing 320. In some embodiments, the haptic module 379 may be disposed adjacent to the sound output module 355. In an embodiment, the haptic module 379 may also be disposed in the first housing 310.

In an embodiment, the electronic device 301 may include a camera module 380 (e.g., the camera module 180 of FIG. 1). The camera module 380 may include at least one camera to obtain an image of one direction (e.g., the +Z direction) or another direction (e.g., the -Z direction) of the electronic device 301.

In an embodiment, the electronic device 301 may include a battery 389 (e.g., the battery 189 of FIG. 1). In an embodiment, the battery 389 may be disposed in the second housing 320. In an embodiment, the battery 389 may be disposed in the first housing 310.

In an embodiment, the electronic device 301 may include a first PCB 351, a second PCB 352, and a third PCB 353. The first PCB 351, the second PCB 352, and the third PCB 353 may include a plurality of metal layers, and a plurality of dielectrics each positioned between a pair of adjacent metal layers. In an embodiment, the first PCB 351 may be disposed in the first housing 310. The first PCB 351 may include a first electronic component (e.g., the power management module 188 of FIG. 1). The second PCB 352 may be disposed in the first housing 310. The second PCB 352 may be electrically connected, for example, to the actuator 390. The third PCB 353 may be disposed in the second housing 320. The third PCB 353 may be electrically connected, for example, to the haptic module 379.

In an embodiment, the first housing 310 may include a first cover 311, a first plate 312, a second plate 313, and a support structure 314. The second housing 320 may include a second cover 321, and a third plate 322. The first cover 311 may at least partially enclose the sound output module 355, the camera module 380, and the haptic module 379. The first plate 312 may at least partially accommodate electronic components (e.g., the actuator 390, the sound output module 355, the camera module 380, the first PCB 351, the second PCB 352, the third PCB 353, the haptic module 379, and other electronic components). The second plate 313 may be positioned between the first plate 312 and the display 361 to support the actuator 390 and the display 361. The support structure 314 may include a base plate configured to flexibly bend, and a plurality of support bars arranged along the base plate to be spaced apart from each other and configured to support the display 361. The second cover 321 may at least partially surround the first cover 311 and may be coupled to the first cover 311 such that the first cover 311 may slide relative to the second cover 321. The second cover 321 may expose at least a portion (e.g., the camera module 380) of the electronic components to the outside of the electronic device 301. The third plate 322 may be disposed inside the second cover 321. Meanwhile, the structures of the first housing 310 and the second housing 320 described herein are not limited to the shown embodiments, and various shapes of structures may be present.

In an embodiment, the electronic device 301 may include at least one antenna (not shown). For example, the at least one antenna may wirelessly communicate with an external electronic device (e.g., the electronic device 104 of FIG. 1), or may wirelessly transmit and receive power required for charging. According to an embodiment, the antenna may include a legacy antenna, a mmWave antenna, a near field communication (NFC) antenna, a wireless charging antenna, and/or a magnetic secure transmission (MST) antenna. In an embodiment, the first housing 310 and the second housing 320 may include a conductive portion that is at least partially formed of metal, to form an antenna structure that functions as a radiating element.

The electronic devices according to embodiments may be one of various types of electronic devices. The electronic device may include, for example, a portable communication device (e.g., a smartphone), a computer device, a portable multimedia device, a portable medical device, a camera, a wearable device, or a home appliance device. According to an embodiment of the disclosure, the electronic device is not limited to those described above.

It should be appreciated that various embodiments of the present disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things, unless the relevant context clearly indicates otherwise. As used herein, "A or B", "at least one of A and B", "at least one of A or B", "A, B or C", "at least one of A, B and C", and "at least one of A, B, or C," may include any one of the items listed together in the corresponding one of the phrases, or all possible combinations thereof. Terms such as "1^{st}", "2^{nd}", or "first" or "second" may simply be used to distinguish the component from other components in question, and do not limit the components in other aspects (e.g., importance or order). It is to be understood that if a component (e.g., a first component) is referred to, with or without the term "operatively" or "communicatively", as "coupled with," "coupled to," "connected with," or "connected to" another component (e.g., a second component), the component may be coupled with the other component directly (e.g., by wire), wirelessly, or via a third component.

As used in connection with embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Embodiments as set forth herein may be implemented as software (e.g., the program 140) including one or more instructions that are stored in a storage medium (e.g., an internal memory 136 or an external memory 138) that is readable by a machine (e.g., the electronic device 101 of FIG. 1). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., a compact disc read-only memory (CD-ROM)), or be distributed (e.g., downloaded or uploaded) online via an application store (e.g., PlayStore^{™}), or between two user devices (e.g., smartphones) directly. If distributed online, at least portion of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities, and some of the multiple entities may be separately disposed in different components. According to embodiments, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

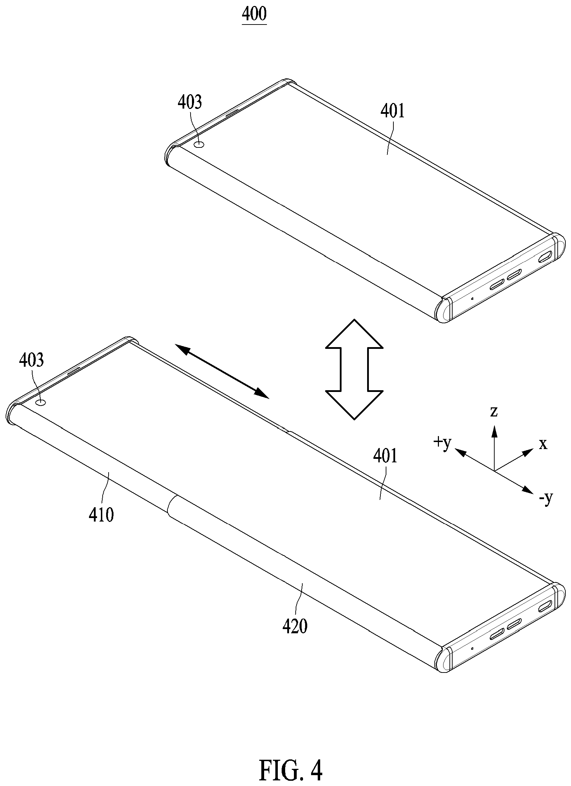

FIG. 4 is a diagram illustrating an example of an expansion and retraction of an electronic device according to an embodiment.

According to an embodiment, in the example shown in FIG. 4, an electronic device 400 (e.g., the electronic device 101 of FIG. 1, the electronic device 201 of FIGS. 2A to 2D, and the electronic device 301 of FIG. 3) may include a first housing 410 (e.g., the first housing 210 of FIG. 2B, and the first housing 310 of FIG. 3), and a second housing 420 (e.g., the second housing 220 of FIG. 2B, and the second housing 320 of FIG. 3) that is coupled to the first housing 410 to be movable in a y-axis direction. The first housing 410 may manually protrude from the second housing 420 through a user's manipulation. The first housing 410 may protrude by an amount desired by a user, and a size of a viewable area 401 (e.g., the display area 2610 of FIGS. 2A and 2B) of a flexible display (e.g., the display 261 of FIGS. 2A and 2B) of the electronic device 400 may be changed.

According to an embodiment, the electronic device 400 may include a linear actuator, e.g. a mechanical or electro-mechanical actuator. For example, the electronic device may include a motor (not shown) (e.g., the actuator 390 of FIG. 3), a rack gear (not shown), and a pinion gear (not shown). The pinion gear may be engaged with the rack gear when the first housing 410 and the second housing 420 are slidably coupled to each other. The motor may rotate the pinion gear engaged with the rack gear. When the pinion gear is rotated, the first housing 410 may move in the y-axis direction relative to the second housing 420.

According to an embodiment, in the example shown in FIG. 4, the size and a length of the viewable area 401 may increase as the flexible display of the electronic device 400 expands. The size and the length of the viewable area 401 may decrease due to a retraction of the flexible display of the electronic device 400. Due to the expansion or retraction of the flexible display of the electronic device 400, a camera 403 (e.g., the camera module 180 of FIG. 1) may move in the y-axis direction.

According to an embodiment, the electronic device 400 may include a slide sensor (not shown), and may measure a moving distance of the rack gear using the slide sensor. When the measured moving distance reaches a maximum moving distance or a minimum moving distance (e.g., 0 mm), the electronic device 400 may stop driving of the motor.

The embodiments described above with reference to FIGS. 1 to 3 may apply to the electronic device 400 of FIG. 4, and thus a detailed description thereof is omitted.

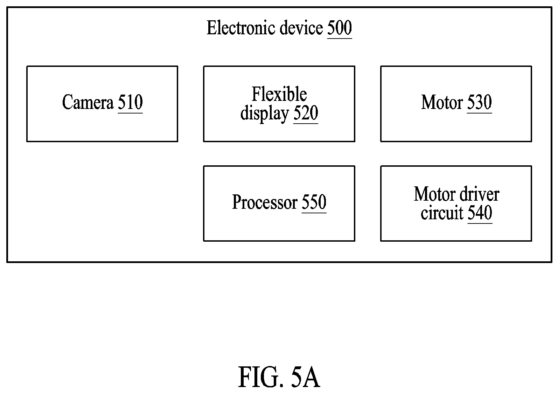

FIGS. 5A to 5C are diagrams illustrating an electronic device according to embodiments.

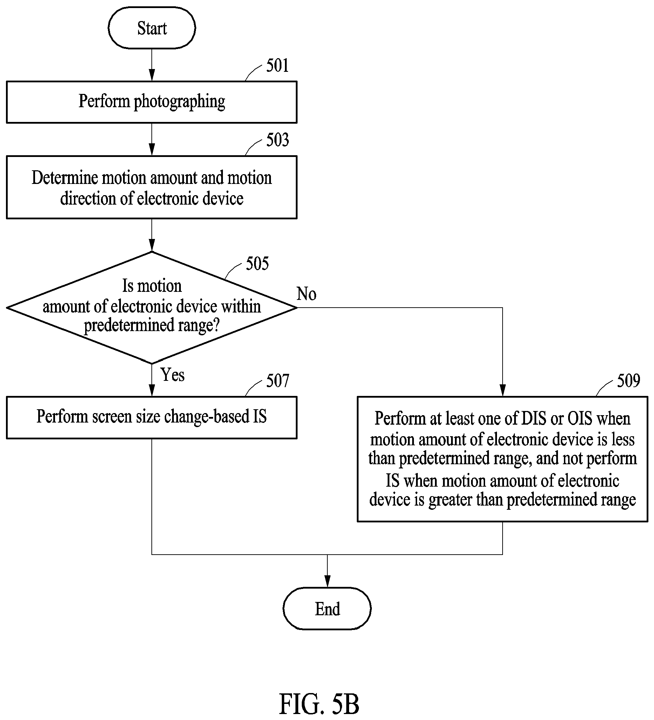

FIG. 5A is a block diagram illustrating a configuration of an electronic device 500 (e.g., the electronic device 101 of FIG. 1, the electronic device 201 of FIGS. 2A to 2D, the electronic device 301 of FIG. 3, and the electronic device 400 of FIG. 4) according to an embodiment, and FIG. 5B illustrates an example of a method of operating the electronic device 500 according to an embodiment.

Referring to FIG. 5A, the electronic device 500 includes a camera 510 (e.g., the camera module 180 of FIG. 1 and the camera module 280 of FIG. 2D), a flexible display 520 (e.g., the display module 160 of FIG. 1, and the display 261 of FIGS. 2A and 2B), a motor 530 (e.g., the actuator 390 of FIG. 3), a motor driver circuit 540, and a processor 550 (e.g., the processor 120 of FIG. 1).

According to embodiments, the camera 510 performs a photographing and may transmit one or more images obtained by the photographing to the processor 550. The camera 510 may include a front camera and a rear camera. The rear camera may include, for example, a wide-angle camera, an ultrawide-angle camera, and a telephoto camera, but is not limited thereto.

According to an embodiment, the motor 530 (e.g., a step motor) changes a size of a viewable area (e.g., the viewable area 401 of FIG. 4) of the flexible display 520 (e.g., through a rotation). For example, the motor 530 may be rotatably coupled with a shaft (e.g. a pinion gear) rotatably coupled to means (e.g. a rack gear) for changing a size of the viewable area. That is, the motor may be indirectly coupled to the means of changing the size of the viewable area. The motor 530 may change the size of the viewable area (e.g., the display area 2610 of FIGS. 2A and 2B, and the viewable area 401 of FIG. 4) of the flexible display 520 by expanding or reducing the flexible display 520 (e.g., through the rotation).

According to an embodiment, the motor driver circuit 540 controls the motor 530 (e.g., for the rotation of the motor 530).

According to an embodiment, the processor 550 may set a photographing mode (e.g., a panorama photographing mode, a moving image photographing mode, or a hyperlapse mode) of the electronic device 500 according to a user input. When the photographing mode is set, or when a user selects a predetermined function (e.g., a gimbal effect function) before photographing is started in the set photographing mode, the processor 550 may determine initial control information (or first control information) for controlling the motor drive circuit 540 such that the viewable area of the flexible display 520 may have a first length. For example, a maximum expansion length of the flexible display 520 may be "Nₘₐₓ". The processor 550 may determine the initial control information (or the first control information) (e.g., a moving distance and a moving direction of a rack gear) such that the viewable area of the flexible display 520 may have the first length (e.g., "Nₘₐₓ/2").

According to an embodiment, the processor 550 may control the motor driver circuit 540 based on the determined initial control information. The motor driver circuit 540 may control the motor 530 based on the determined initial control information, and the motor 530 may rotate under the control of the motor driver circuit 540. The flexible display 520 may be expanded or retracted by the motor 530 (e.g., by the rotation of the motor 530), and the viewable area may have the first length.

Hereinafter, an example of a method of operating the electronic device 500 will be described with reference to FIGS. 5A and 5B.

According to an embodiment, in operation 501 of FIG. 5B, the electronic device 500 (e.g., the camera 510) performs photographing. In an example, the electronic device 500 may execute a camera application, may set a photographing mode (e.g., a photographing mode for obtaining a still image, a panorama photographing mode, a moving image photographing mode, and a hyperlapse mode) of the camera application, and may perform photographing using the camera 510 in the set photographing mode. In another example, the electronic device 500 may execute a portion of applications (e.g., an application that uses the camera 510 by fixing the electronic device 500 in a portrait orientation), and may perform photographing using the camera 510. The direction of the electronic device 500 will be described below.

In operation 503, the electronic device 500 (e.g., the processor 550) determines a motion amount and a motion direction of the electronic device 500 during the photographing. For example, the motion amount includes a movement value (or distance value) in which the electronic device (500) moves when there is a shake of the electronic device (500) during the photographing. The motion direction includes a direction in which the electronic device (500) when there is the shake of the electronic device (500) during the photographing.

According to an embodiment, a motion sensor (e.g., a gyro sensor) (not shown) may generate sensing data by sensing a motion of the electronic device 500 during the photographing with the camera 510, and may transmit the sensing data to the processor 550. The processor 550 may determine a motion direction (e.g., a +y-axis direction or a -y-axis direction) and a movement value(e.g., a shake value (e.g., a y-axis movement value (or movement amount))) of the electronic device 500 based on the sensing data of the motion sensor.

For example, during a panorama photographing, the processor 550 may analyze a length (or a number of pixels) corresponding to a degree by which a field of view (FOV) of the camera 510 is out of a guideline for the panorama photographing. In this example, the analyzed length (or the number of pixels) may correspond to the motion amount of the electronic device 500. However, the embodiments are not limited thereto. In another example, the processor 550 may determine the shake value (e.g., the y-axis movement value (or movement amount)) of the gyro sensor as the motion amount of the electronic device 500, instead of analyzing the above-described length during the panorama photographing.

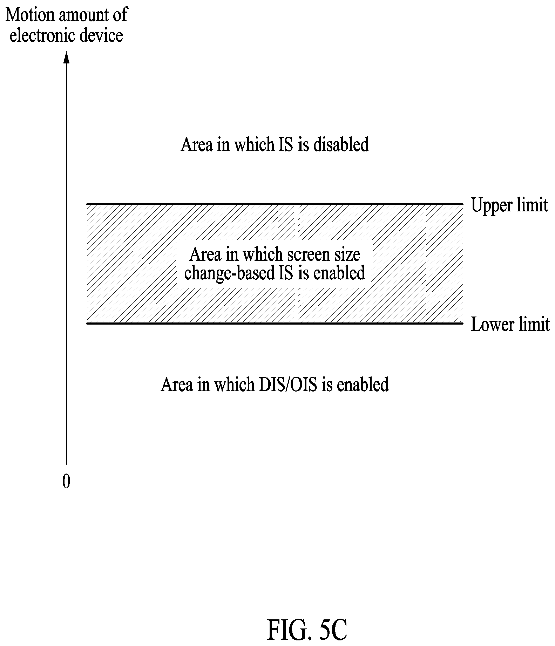

In operation 505, the electronic device 500 (e.g., the processor 550) determines whether the motion amount (e.g., the shake value of the gyro sensor or the analyzed length) of the electronic device 500 is within a predetermined range. The predetermined range may be a motion range (or area) in which a "screen size change-based image stabilization (IS)" that will be described below is enabled. As shown in FIG. 5C, the predetermined range may be a range between a lower limit and an upper limit.

When the motion amount of the electronic device 500 is within the predetermined range (Yes in operation 505), the electronic device 500 (e.g., the processor 550) may perform the "screen size change-based IS" in operation 507. The electronic device 500 (e.g., the processor 550) may change the size of the viewable area of the flexible display 520 by driving the motor 530, and accordingly the IS may be performed based on a change in the size, which will be described in detail below. To distinguish the above IS from a digital image stabilization (DIS) (e.g., a video digital image stabilization (VDIS)) and an optical image stabilization (OIS), the IS may also be referred to as the "screen size change-based IS (or IS by the motor 530)".

According to an embodiment, when the motion amount of the electronic device 500 is within the predetermined range, the processor 550 determines control information for controlling the motor driver circuit 540 based on the motion amount and the motion direction of the electronic device 500 in operation 507. For example, when the motion direction of the electronic device 500 is determined as a first direction (e.g., the +y-axis direction), the processor 550 may determine second control information (e.g., a moving distance and a moving direction of a rack gear) for reducing the viewable area, based on a motion amount (e.g., a +y-axis movement value) of the electronic device 500 in the first direction. In other words, the processor 550 may determine information indicating a distance at which the rack gear needs to move along a -y-axis. When the motion direction of the electronic device 500 is determined as a second direction (e.g., the -y-axis direction), the processor 550 may determine third control information (e.g., a moving distance and a moving direction of a rack gear) for expanding the viewable area, based on an amount (e.g., a -y-axis movement value) of a motion of the electronic device 500 in the second direction. In other words, the processor 550 may determine information indicating a distance at which the rack gear needs to move along a +y-axis.

According to an embodiment, in operation 507, the processor 550 controls the motor driver circuit 540 based on the control information so that the IS may be performed by changing the size of the viewable area of the flexible display 520. In an example, the processor 550 may control the motor driver circuit 540 based on the second control information. The motor driver circuit 540 may control the motor 530 based on the second control information, and the motor 530 may rotate under the control of the motor driver circuit 540. The viewable area of the flexible display 520 may be retracted by the motor 530, (e.g., the rotation of the motor 530). In another example, the processor 550 may control the motor driver circuit 540 based on the third control information. The motor driver circuit 540 may control the motor 530 based on the third control information, and the motor 530 may rotate under the control of the motor driver circuit 540. The viewable area of the flexible display 520 may be expanded by the motor 530 (e.g., the rotation of the motor 530).

According to an embodiment, in operation 507, due to an expansion or retraction of the flexible display 520 (or the viewable area), a position of a lens of the camera 510 may be substantially the same as that of the camera 510 before the electronic device 500 moves, and accordingly the IS may be achieved.

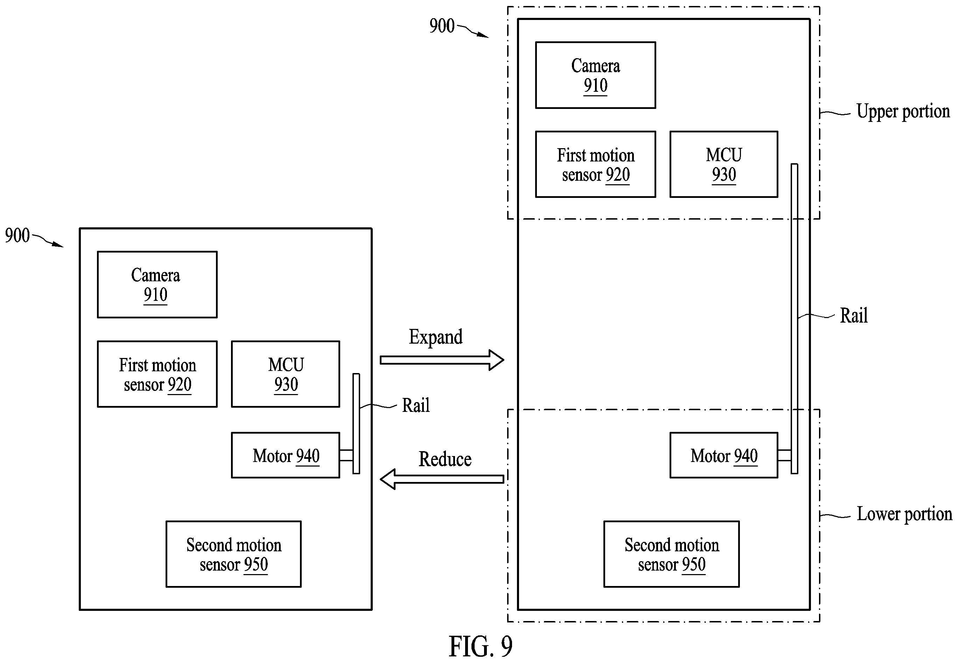

Referring back to FIG. 5B, when the motion amount of the electronic device 500 (e.g., the processor 550) is less than the predetermined range (No in operation 505), the electronic device 500 performs at least one of the DIS or the OIS in operation 509. In other words, when the motion amount of the electronic device 500 (e.g., the processor 550) is less than the lower limit of FIG. 5C, the electronic device 500 may perform at least one of the DIS or the OIS. The processor 550 may allow a micro controller unit (MCU) (not shown) (e.g., an MCU 930 that will be described below with reference to FIG. 9) to perform at least one of the DIS or the OIS.

When the motion amount of the electronic device 500 (e.g., the processor 550) is greater than the predetermined range (No in operation 505), the electronic device 500 may not perform the IS (e.g., a "screen size change-based IS", a DIS, and an OIS) in operation 509. Not performing the IS may also be referred to deactivating the IS or keeping the IS deactivated. In other words, when the motion amount of the electronic device 500 (e.g., the processor 550) exceeds the upper limit of FIG. 5C, the electronic device 500 may not perform the IS. If the motion amount of the electronic device 500 is greater than the predetermined range, the electronic device 500 may determine that a motion of a user is relatively large, and may not perform the "screen size change-based IS", the DIS, and the OIS.

In an embodiment, the electronic device 500 may determine whether the electronic device 500 is in a portrait orientation. The portrait orientation of the electronic device 500 may indicate that the electronic device 500 is positioned on a y-axis (or the electronic device 500 is expanded or retracted in the y-axis direction). A landscape orientation of the electronic device 500 may indicate that the electronic device 500 is positioned on an x-axis (or the electronic device 500 is expanded or retracted is an x-axis direction). An operation of determining whether the electronic device 500 is in the portrait orientation may be performed before operation 501 of FIG. 5B, performed together with operation 501, performed between operations 501 and 503, performed together with operation 503, performed between operations 503 and 505, performed together with operation 505, or performed between operations 505 and 507. When the electronic device 500 is in the portrait orientation and when the motion amount of the electronic device 500 is within the predetermined range, the electronic device 500 may perform the "screen size change-based IS". When the electronic device 500 is not in the portrait orientation even though the motion amount of the electronic device 500 is within the predetermined range, the electronic device 500 may not perform the "screen size change-based IS". In an example, a portion of applications that use the camera 510 by fixing the electronic device 500 in the portrait orientation may be executed. In this example, the electronic device 500 may not determine whether the electronic device 500 is in the portrait orientation.

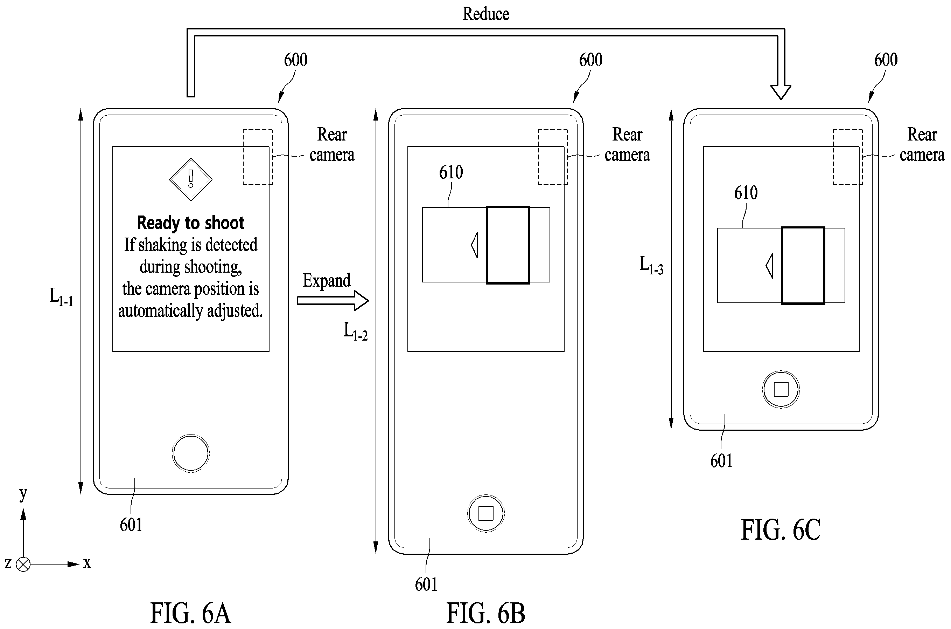

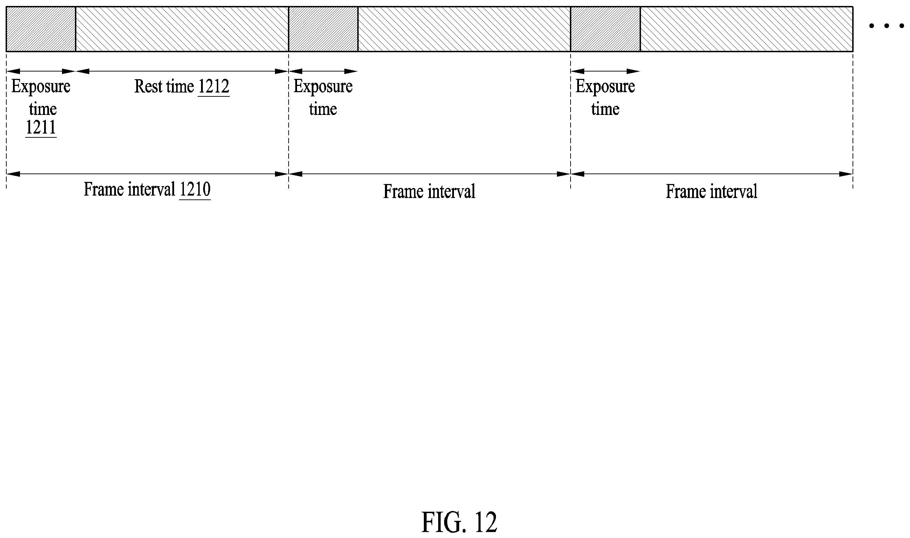

According to an embodiment, the electronic device 500 may perform an IS during panorama photographing, which will be described below with reference to FIGS. 6A to 8B. The electronic device 500 may perform an IS during photographing of a moving image, which will be described below with reference to FIGS. 9 to 11B. The electronic device 500 may perform an IS during hyperlapse photographing, which will be described below with reference to FIGS. 12 to 16B.

FIGS. 6A to 8B are diagrams illustrating an IS in a panorama photographing mode of an electronic device according to embodiments.

According to an embodiment, in an example of FIG. 6A, an electronic device 600 (e.g., the electronic device 101 of FIG. 1, the electronic device 201 of FIGS. 2A to 2D, the electronic device 301 of FIG. 3, the electronic device 400 of FIG. 4, and the electronic device 500 of FIG. 5A) may set a panorama photographing mode.

According to an embodiment, when the panorama photographing mode is set, or when a user selects a predetermined function (e.g., a gimbal effect function), the electronic device 600 may adjust a length of a viewable area 601 (e.g., the display area 2610 of FIGS. 2A and 2B, and the viewable area 401 of FIG. 4) of a flexible display (e.g., the flexible display 520 of FIG. 5A) to L₁₋₁. When a maximum expansion length of the flexible display of the electronic device 600 is "Nₘₐₓ", the length L₁₋₁ may be, for example, "Nₘₐₓ/2," but is not limited thereto. For example, the electronic device 600 may determine control information₁₋₁ (e.g., a moving distance and a moving direction of a rack gear) such that the viewable area 601 may have the length L₁₋₁, and may drive a motor by controlling a motor driver circuit (e.g., the motor driver circuit 540 of FIG. 5A) based on the control information₁₋₁. In response to the driving of the motor, the viewable area 601 may have the length L₁₋₁.

According to an embodiment, the electronic device 600 may start panorama photographing when a user presses a panorama photographing button.

According to an embodiment, the electronic device 600 may determine whether the electronic device 600 is in a portrait orientation. For example, the electronic device 600 may measure a tilt of the electronic device 600 using an acceleration sensor and/or a gyro sensor, and determine whether the electronic device 600 is in the portrait orientation or a landscape orientation based on the measured tilt. The portrait orientation of the electronic device 600 may indicate that the electronic device 600 is positioned on the y-axis (or the electronic device 600 is expanded or retracted in the y-axis direction), as shown in FIGS. 6A to 6C. The landscape orientation of the electronic device 600 may indicate that the electronic device 600 is positioned on the x-axis (or the electronic device 600 is expanded or retracted in the x-axis direction). The electronic device 600 may perform a "screen size change-based IS" when the electronic device 600 is in the portrait orientation, and may not perform the "screen size change-based IS" when the electronic device 600 is in the landscape orientation, which will be described below.

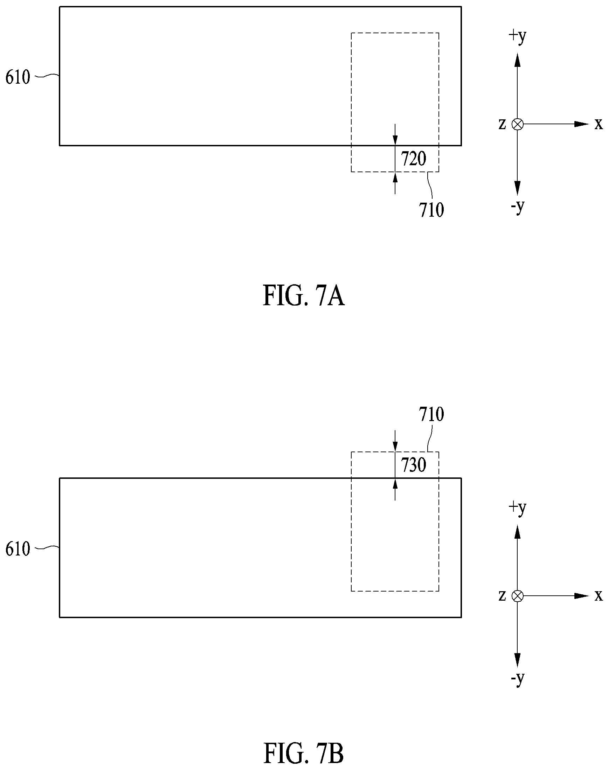

According to an embodiment, the electronic device 600 may display a guideline 610 on the flexible display during the panorama photographing. The electronic device 600 may determine whether a FOV of a camera is out of the guideline 610 during the panorama photographing. For example, as shown in FIGS. 7A and 7B, the electronic device 600 may display an object 710 representing the FOV of the camera on the flexible display. The electronic device 600 may compare the object 710 to the guideline 610 displayed on the flexible display. The electronic device 600 may determine whether the FOV of the camera deviates below the guideline 610 as shown in FIG. 7A, or may determine whether the FOV of the camera deviates above the guideline 610 as shown in FIG. 7B.

According to an embodiment, the electronic device 600 may perform photographing while the FOV of the camera deviates below the guideline 610. The electronic device 600 may display the object 710 corresponding to the FOV on the flexible display as shown in FIG. 7A, based on stitched images, an image currently received from the camera (e.g., an image obtained with a FOV deviating below the guideline 610), and motion information (e.g., a -y-axis movement direction of the electronic device 600) obtained through a gyro sensor and/or an acceleration sensor. The electronic device 600 may analyze a position of the object 710 and calculate a length 720 (e.g., a number of pixels) corresponding to a degree by which the FOV deviates below the guideline 610. The length 720 (or the number of pixels) may correspond to an amount of a motion of the electronic device 600 along the -y-axis. To expand the viewable area 601, the electronic device 600 may determine a distance at which a rack gear needs to move along the +y-axis, based on the amount (e.g., the calculated length 720) of the motion along the -y-axis. In an example, the electronic device 600 may determine that "n" pixels are within the length 720. The electronic device 600 may store a table in which a moving distance of the rack gear corresponding to the number of pixels is recorded, and may search for a moving distance of the rack gear corresponding to the "n" pixels from the table. The electronic device 600 may determine the found moving distance as a distance at which the rack gear needs to move. Table 1 shows an example of the table in which the moving distance of the rack gear corresponding to the number of pixels is recorded.

**[Table 1]**

| Number of pixels | Moving distance (mm) of rack gear |
|---|---|
| 5 | 3 |
| 10 | 6 |
| ... | ... |

In the example of FIG. 7A, the electronic device 600 may determine control information₁₋₂ (e.g., a moving distance and a moving direction of a rack gear) and may drive the motor by controlling the motor driver circuit based on the determined control information₁₋₂. As shown in FIG. 6B, the viewable area 601 may be expanded. A length L₁₋₂ of the viewable area 601 of FIG. 6B may be greater than the length L₁₋₁ of the viewable area 601 of FIG. 6A. A position of a rear camera shown in FIG. 6A and a position of the rear camera shown in FIG. 6B may be the same on the y-axis. Even though a hand of a user moves downwards (e.g., in the -y-axis direction) during the panorama photographing, the electronic device 600 may maintain the position of the rear camera by expanding the viewable area 601. When a motion out of the guideline 610 occurs, the electronic device 600 may perform the "screen size change-based IS" such that the FOV of the camera may be within the guideline 610. That is, the electronic device 600 may control the viewable area 501 of the flexible display to be expanded (e.g. FIG. 6B) or to be retracted (e.g. FIG 6C) in response to the detected motion out of the guideline 610.

In an example, the length 720 may be greater than a predetermined range in which the "screen size change-based IS" is enabled. In this example, the electronic device 600 may terminate the panorama photographing, or may not perform the IS.

According to an embodiment, the electronic device 600 may perform photographing while the FOV of the camera deviates above the guideline 610. The electronic device 600 may display the object 710 corresponding to the FOV on the flexible display as shown in FIG. 7B, based on stitched images, an image currently received from the camera (e.g., an image obtained with a FOV deviating above the guideline 610), and motion information (e.g., a +y-axis movement direction of the electronic device 600) obtained through a gyro sensor and/or an acceleration sensor. The electronic device 600 may analyze the position of the object 710 and calculate a length 730 (e.g., a number of pixels) corresponding to a degree by which the FOV deviates above the guideline 610. The electronic device 600 may determine the length 730 (or the number of pixels) as an amount of a motion of the electronic device 600 along the +y-axis. To retract the viewable area 601, the electronic device 600 may determine a distance at which a rack gear needs to move along the -y-axis, based on the amount (e.g., the calculated length 730) of the motion along the +y-axis. In an example, the electronic device 600 may determine that "m" pixels are within the length 730. The electronic device 600 may search for a moving distance corresponding to the "m" pixels from a table (e.g., Table 1 shown above). The electronic device 600 may determine the found moving distance as a distance at which the rack gear needs to move.

In the example of FIG. 7B, the electronic device 600 may determine control information₁₋₃ (e.g., a moving distance and a moving direction of a rack gear) and may drive the motor by controlling the motor driver circuit based on the determined control information₁₋₃. As shown in FIG. 6C, the viewable area 601 may be retracted. A length L₁₋₃ of the viewable area 601 of FIG. 6C may be less than the length L₁₋₁ of the viewable area 601 of FIG. 6A. The position of the rear camera shown in FIG. 6A and a position of the rear camera shown in FIG. 6C may be the same on the y-axis. Even though the hand of the user moves upwards (e.g., in the +y-axis direction) during the panorama photographing, the electronic device 600 may maintain the position of the rear camera by reducing the viewable area 601. When a motion out of the guideline 610 occurs, the electronic device 600 may perform the "screen size change-based IS" such that the FOV of the camera may be within the guideline 610.

In an example, the length 730 may be greater than a predetermined range in which the "screen size change-based IS" is enabled. In this example, the electronic device 600 may terminate the panorama photographing, or may not perform the IS.

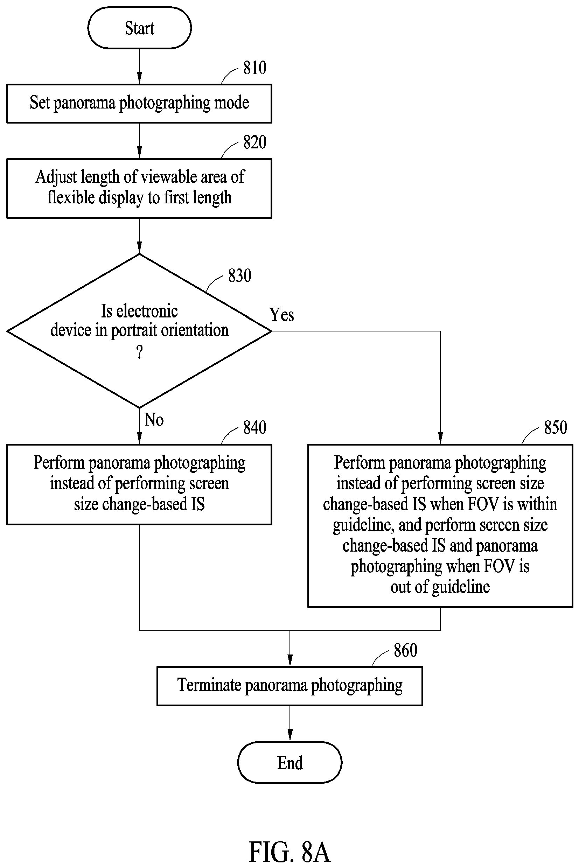

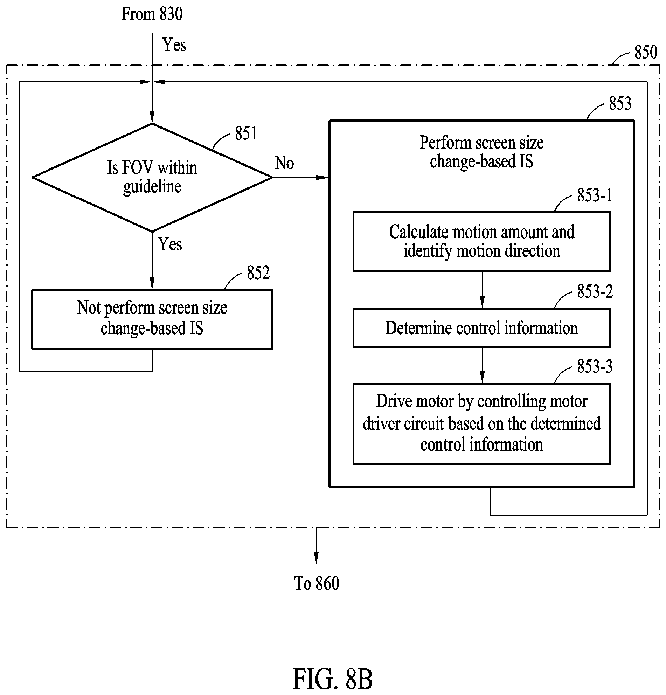

FIGS. 8A and 8B illustrate examples of the "screen size change-based IS" performed by the electronic device 600 during the panorama photographing.

Referring to FIG. 8A, in operation 810, the electronic device 600 may set the panorama photographing mode.

In operation 820, the electronic device 600 may adjust the length of the viewable area 601 of the flexible display to a first length (e.g., the length L₁₋₁ of FIG. 6A).

According to embodiments, operation 820 may be omitted.

In operation 830, the electronic device 600 may determine whether the electronic device 600 is in the portrait orientation. In an example, the electronic device 600 may perform operation 820 when the electronic device 600 is in the portrait orientation, and may not perform operation 820 when the electronic device 600 is in the landscape orientation. In other words, in view of the portrait orientation and the landscape orientation, the electronic device 600 may only perform operation 820 when the electronic device 600 is in the portrait orientation.

In an example in which the electronic device 600 is not in the portrait orientation (e.g., when the electronic device 600 is in the landscape orientation) (No in operation 830), the electronic device 600 may perform panorama photographing instead of performing a "screen size change-based IS" in operation 840. In other words, when the electronic device 600 is in the landscape orientation, the electronic device 600 may not perform the "screen size change-based IS" during the panorama photographing.

In an example in which the electronic device 600 is in the portrait orientation (Yes in operation 830), when the FOV of the camera (e.g., the FOV of the camera of FIGS. 7A and 7B) is within a guideline (e.g., the guideline 610 of FIG. 6A), the electronic device 600 may perform the panorama photographing, instead of performing the "screen size change-based IS", and when the FOV of the camera is out of the guideline, the electronic device 600 may perform the "screen size change-based IS" and the panorama photographing in operation 850. Operation 850 will be further described below with reference to FIG. 8B.

Although operation 830 is performed after operations 810 and 820 as shown in FIG. 8A, this is merely an example. In another example, operation 830 is not limited to being performed after operations 810 and 820. Operation 830 may be performed independently of operations 810 and 820.

In an example, panorama photographing may be performed in a state in which the electronic device 600 is fixed in the portrait orientation. In this example, the electronic device 600 may not perform operations 830 and 840.

When a panorama photographing end event occurs during the panorama photographing, the electronic device 600 may terminate the panorama photographing in operation 860. In an example, when the electronic device 600 performs panorama photographing while moving in one direction, when a user moves the electronic device 600 in an opposite direction to the direction, the electronic device 600 may terminate the panorama photographing. In another example, when a user input to a panorama photographing end button is received or when the electronic device 600 is stopped for a predetermined period of time (e.g., between one to three seconds, particularly preferred two seconds), the electronic device 600 may terminate the panorama photographing. The panorama photographing end event is not limited to the above-described examples.

Although not shown in FIG. 8A, the electronic device 600 may generate a panoramic image by performing stitching on images obtained during the panorama photographing. When the panorama photographing is terminated, the electronic device 600 may store the panoramic image in a memory (e.g., the memory 130 of FIG. 1) and display the panoramic image on the flexible display.

Hereinafter, an example of operation 850 is described with reference to FIG. 8B.

Referring to FIG. 8B, in operation 851, the electronic device 600 may determine whether the FOV of the camera is within the guideline.

When the FOV of the camera is within the guideline (Yes in operation 851), the electronic device 600 may not perform the "screen size change-based IS" in operation 852. In operation 852, the electronic device 600 may perform at least one of a DIS or an OIS. In an embodiment, an example in which the FOV of the camera is within the guideline may correspond to an example in which the motion amount of the electronic device 500 described with reference to FIGS. 5B and 5C is less than the predetermined range.

When the FOV of the camera is out of the guideline (No in operation 851), the electronic device 600 may perform the "screen size change-based IS" in operation 853.

In an embodiment, when the FOV of the camera is out of the guideline, the electronic device 600 may not unconditionally perform operation 853. When the FOV of the camera is out of the guideline at a predetermined level or less (e.g., when the motion amount of the electronic device 600 is within a predetermined range), the electronic device 600 may perform operation 853. When the FOV of the camera exceeds the predetermined level and is out of the guideline (e.g., when the motion amount of the electronic device 600 is greater than the predetermined range), the electronic device 600 may terminate the panorama photographing, or may not perform an IS.

In operation 853-1, the electronic device 600 may calculate the motion amount of the electronic device 600 and identify a motion direction of the electronic device 600. For example, the electronic device 600 may calculate the motion amount (e.g., the length 720 or 730) of the electronic device 600 based on a degree by which the FOV of the camera is out of the guideline, and may identify the motion direction of the electronic device 600 using a sensor (e.g., a gyro sensor). In an embodiment, the electronic device 600 may determine whether the motion amount of the electronic device 600 is within a predetermined range in which the "screen size change-based IS" is enabled. When the motion amount of the electronic device 600 is within the predetermined range, the electronic device 600 may perform operation 853-2 that will be described below. When the motion amount of the electronic device 600 is greater than the predetermined range, the electronic device 600 may terminate the panorama photographing, or may not perform operations 853-2 and 853-3 that will be described below.

In operation 853-2, the electronic device 600 may determine control information (e.g., the control information₁₋₂ or the control information₁₋₃) based on the motion amount and motion direction of the electronic device 600.

In operation 853-3, the electronic device 600 may drive the motor by controlling the motor driver circuit based on the determined control information. A viewable area (e.g., the viewable area 601 of FIG. 6) may be expanded or retracted by driving the motor, and an IS may be performed by adjusting a position of a camera accordingly, (e.g. on the y-axis).

When the electronic device 600 performs the "screen size change-based IS", operation 850 may be repeatedly performed. When a panorama photographing end event occurs while operation 850 is being performed, the electronic device 600 may perform operation 860.

The embodiments described above with reference to FIGS. 1 to 5C may apply to the electronic device 600 of FIGS. 6A to 8B, and thus a detailed description thereof is omitted.

FIGS. 9 to 11B are diagrams illustrating an IS in a moving image photographing mode of an electronic device according to embodiments.

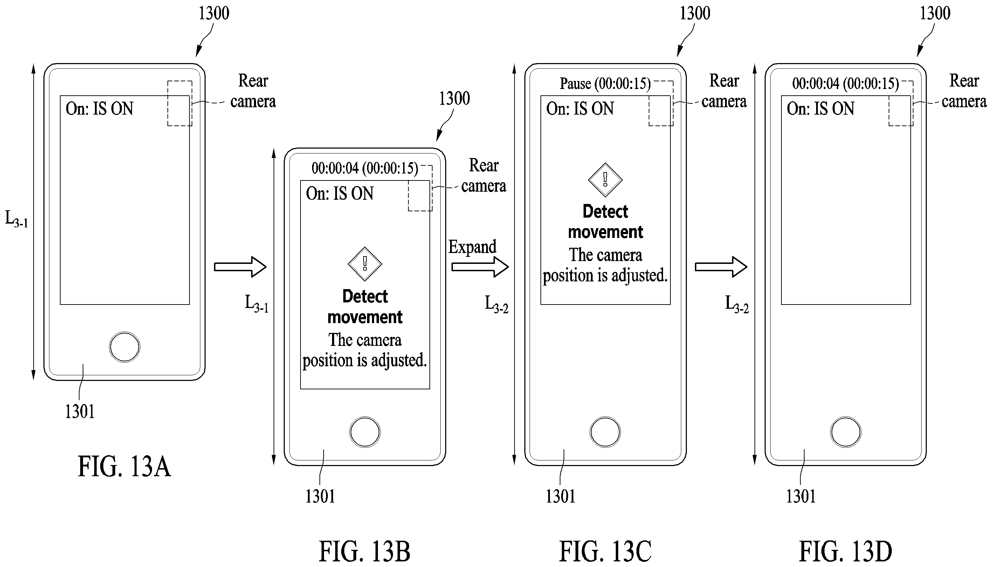

According to an embodiment, an electronic device 900 of FIG. 9 (e.g., the electronic device 101 of FIG. 1, the electronic device 201 of FIGS. 2A to 2D, the electronic device 301 of FIG. 3, the electronic device 400 of FIG. 4, and the electronic device 500 of FIG. 5A) may include a camera 910, a first motion sensor 920, the MCU 930, a motor 940, and a second motion sensor 950. The electronic device 900 of FIG. 9 may include components of the electronic device 500 of FIG. 5A. The electronic device 900 of FIG. 9 may further include the second motion sensor 950, in comparison to the electronic device 500 of FIG. 5A and an electronic device 1300 of FIG. 13A to 13D that will be described below.

According to an embodiment, the first motion sensor 920 and the second motion sensor 950 may sense a movement of the electronic device 900. For example, each of the first motion sensor 920 and the second motion sensor 950 includes a gyro sensor, but is not limited thereto.

According to an embodiment, the MCU 930 may detect shaking based on sensing data of the first motion sensor 920 and determine a control value for an OIS based on the detected shaking. The MCU 930 may drive an OIS actuator (not shown) by controlling an OIS driver circuit (not shown) based on the determined control value. An OIS may be performed by driving the OIS actuator.

According to an embodiment, the MCU 930 may perform a DIS.

According to an embodiment, a processor (not shown) (e.g., the processor 550 of FIG. 5A) of the electronic device 900 may drive the motor 940 (e.g., the motor 530 of FIG. 5A) by controlling a motor driver circuit (e.g., the motor driver circuit 540 of FIG. 5A). A pinion gear (not shown) may rotate by driving the motor 530. When the pinion gear rotates, a rail (e.g., the rack gear described with reference to FIG. 4) may move so that a flexible display (e.g., the flexible display 520 of FIG. 5A) may be expanded or retracted.

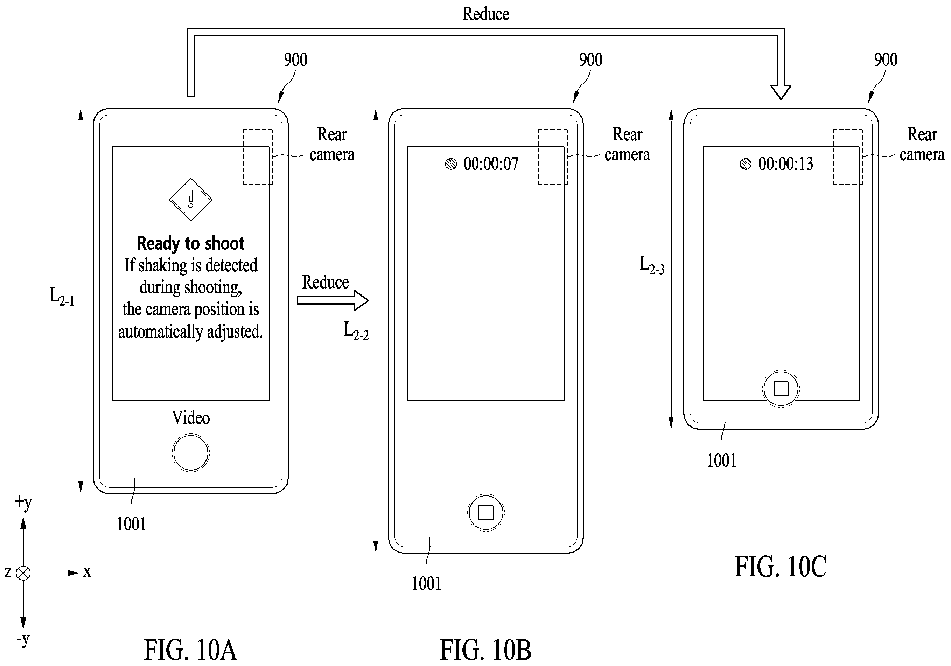

According to an embodiment, the electronic device 900 may set a moving image photographing mode, as shown in FIG. 10A.

According to an embodiment, when the moving image photographing mode is set, or when a user selects a predetermined function (e.g., a gimbal effect function) in the moving image photographing mode, the electronic device 900 may adjust a length of a viewable area 1001 (e.g., the display area 2610 of FIGS. 2A and 2B, and the viewable area 401 of FIG. 4) of a flexible display to "L₂₋₁". When a maximum expansion length (or a maximum length of the viewable area 1001) of the flexible display is "Nₘₐₓ", the length L₂₋₁ may be, for example, "Nₘₐₓ/2", but is not limited thereto. For example, the electronic device 900 may determine control information₂₋₁ (e.g., a moving distance and a moving direction of a rack gear) such that the viewable area 1001 may have the length L₂₋₁, and may drive the motor 940 by controlling a motor driver circuit (not shown) based on the control information₂₋₁. In response to the driving of the motor 940, the viewable area 1001 may have the length L₂₋₁.

According to an embodiment, the electronic device 900 may determine whether the electronic device 900 is in a portrait orientation. As described above, the portrait orientation of the electronic device 900 may indicate that the electronic device 900 is positioned on the y-axis (or the electronic device 900 is expanded or retracted in the y-axis direction), as shown in FIG. 10A to 10C. A landscape orientation of the electronic device 900 may indicate that the electronic device 900 is positioned on the x-axis (or the electronic device 900 is expanded or retracted in the x-axis direction). The electronic device 900 may perform a "screen size change-based IS" when the electronic device 900 is in the portrait orientation, and may not perform the "screen size change-based IS" when the electronic device 900 is in the landscape orientation, which will be described below.

Photographing of a moving image may be started, and a user may move (e.g., walk, or run) during the photographing of the moving image. Since the user moves, the electronic device 900 may move (e.g., move in the y-axis direction). According to an embodiment, when a motion amount (e.g., a shake value of the first motion sensor 910 and/or a shake value of the second motion sensor 950) of the electronic device 900 is within a predetermined range, the electronic device 900 may perform a "screen size change-based IS".

According to an embodiment, the electronic device 900 may move in the -y-axis direction, as shown in FIG. 10B. The electronic device 900 may determine whether the shake value (e.g., a -y-axis movement value) of the second motion sensor 950 exceeds a threshold (e.g., the lower limit of FIG. 5C). When the shake value of the second motion sensor 950 exceeds the threshold, the electronic device 900 may perform the "screen size change-based IS". When the shake value of the second motion sensor 950 exceeds the threshold regardless of whether the shake value of the first motion sensor 920 exceeds the threshold, the electronic device 900 may perform the "screen size change-based IS". In an embodiment, the electronic device 900 may determine control information₂₋₂ (e.g., a moving distance and a moving direction of a rack gear) based on a motion direction (e.g., the -y-axis direction) and the shake value of the second motion sensor 950. To expand the viewable area 1001, the electronic device 900 may determine a distance at which a rack gear needs to move along the +y-axis. For example, the electronic device 900 may store a table (e.g., Table 2 shown below) in which moving distances of a rack gear corresponding to various y-axis movement values of the second motion sensor 950 are recorded, and may search for a moving distance corresponding to a y-axis movement value obtained through the second motion sensor 950 from the table. To expand the viewable area 1001, the electronic device 900 may determine the moving distance found from the table as a distance at which the rack gear needs to move along the +y-axis.

**[Table 2]**

| ±y-axis movement value | Moving distance of rack gear |
|---|---|
| y1 | d1 |
| y2 | d2 |
| ... | ... |

According to an embodiment, the electronic device 900 may drive the motor 940 by controlling the motor driver circuit based on the determined control information₂₋₂. In response to the driving of the motor 940, the viewable area 1001 may be expanded, as shown in FIG. 10B. A length L₂₋₂ of the viewable area 1001 of FIG. 10B may be greater than the length L₂₋₁ of the viewable area 1001 of FIG. 10A. Through the "screen size change-based IS", a position of a rear camera shown in FIG. 10A and a position of the rear camera shown in FIG. 10B may be the same on the y-axis.

According to an embodiment, the electronic device 900 may move in the +y-axis direction, as shown in FIG. 10C. The electronic device 900 may determine whether the shake value (e.g., a +y-axis movement value) of the second motion sensor 950 exceeds the threshold (e.g., the lower limit of FIG. 5C). When the shake value of the second motion sensor 950 exceeds the threshold, the electronic device 900 may perform the "screen size change-based IS". In an embodiment, the electronic device 900 may determine control information₂₋₃ (e.g., a moving distance and a moving direction of a rack gear) based on a motion direction (e.g., the +y-axis direction) and the shake value of the second motion sensor 950. To retract the viewable area 1001, the electronic device 900 may determine a distance at which the rack gear needs to move along the -y-axis. In an example, the electronic device 900 may search for a moving distance corresponding to the y-axis movement value obtained through the second motion sensor 950 from the table (e.g., Table 2 shown above). To retract the viewable area 1001, the electronic device 900 may determine the moving distance found from the table as a distance at which the rack gear needs to move along the -y-axis.

According to an embodiment, the electronic device 900 may drive the motor 940 by controlling the motor driver circuit based on the determined control information₂₋₃. In response to the driving of the motor 940, the viewable area 1001 may be retracted, as shown in FIG. 10C. A length L₂₋₃ of the viewable area 1001 of FIG. 10C may be less than the length L₂₋₁ of the viewable area 1001 of FIG. 10A. Through the "screen size change-based IS", the position of the rear camera shown in FIG. 10A and a position of the rear camera shown in FIG. 10C may be the same on the y-axis.

According to an embodiment, when the shake value (e.g., a y-axis movement value) of the first motion sensor 920 and the shake value (e.g., a y-axis movement value) of the second motion sensor 950 are less than the threshold (e.g., the lower limit of FIG. 5C), the electronic device 900 may perform at least one of a VDIS or an OIS. In other words, when the shake value of the first motion sensor 920 and the shake value of the second motion sensor 950 are less than a predetermined range in which the "screen size change-based IS" is enabled, the electronic device 900 may perform at least one of the VDIS or the OIS.

According to an embodiment, when the shake value of the first motion sensor 920 and/or the shake value of the second motion sensor 950 is greater than the predetermined range, the electronic device 900 may not perform an IS.

According to an embodiment, when the shake value of the first motion sensor 920 and the shake value of the second motion sensor 950 exceed the threshold (or are greater than the predetermined range), the electronic device 900 may provide information indicating severe shaking to the user. For example, the electronic device 900 may display a pop-up message indicating severe shaking on the flexible display.

According to an embodiment, in a state in which the "screen size change-based IS" is being performed, the shake value of the second motion sensor 950 may exceed the threshold, but the shake value of the first motion sensor 920 may be less than the threshold. Alternatively, the shake value of the second motion sensor 950 may be within a predetermined range, but the shake value of the first motion sensor 920 may be less than the predetermined range. In this case, the electronic device 900 may continue to perform the "screen size change-based IS".

According to an embodiment, in a state in which the "screen size change-based IS" is being performed, the shake value of the first motion sensor 920 may be greater than the shake value of the second motion sensor 950, or only the shake value of the first motion sensor 920 may exceed the threshold. In this case, the electronic device 900 may recognize that a system error has occurred, or that the first motion sensor 920 is shaken due to driving of the motor 940. The electronic device 900 may provide information indicating severe shaking to the user. The electronic device 900 may stop driving of the motor 940 and initialize or reset the motor driver circuit.

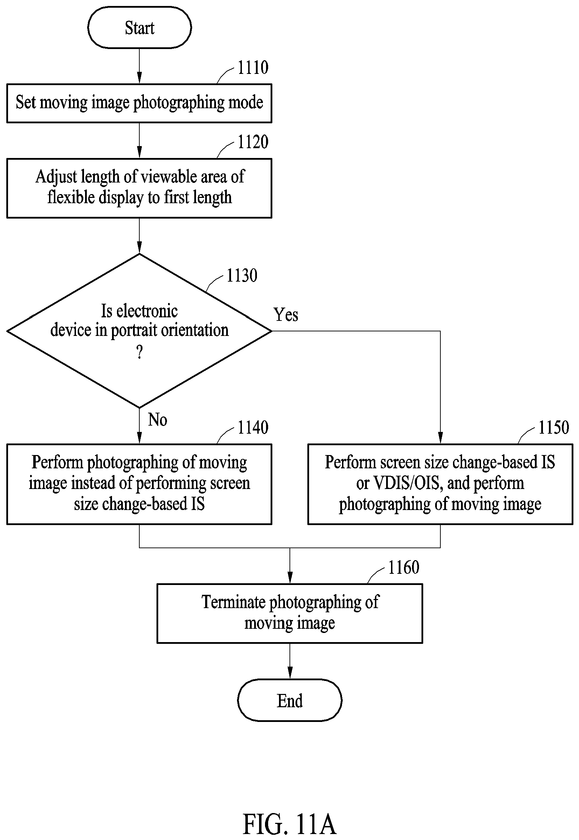

FIG. 11A illustrates an example of an IS of the electronic device 900 during photographing of a moving image.

In operation 1110, the electronic device 900 may set a moving image photographing mode.

In operation 1120, the electronic device 900 may adjust the length of the viewable area 1001 of the flexible display to a first length (e.g., the length L₂₋₁ of FIG. 10A).

According to embodiments, operation 1120 may be omitted.

In operation 1130, the electronic device 900 may determine whether the electronic device 900 is in the portrait orientation.

For example, when the electronic device 900 is not in the portrait orientation (e.g., when the electronic device 900 is in the landscape orientation) (No in operation 1130), the electronic device 900 may perform photographing of a moving image, instead of performing a "screen size change-based IS" in operation 1140. In other words, when the electronic device 900 is in the landscape orientation, the electronic device 900 may not perform the "screen size change-based IS" during the photographing of the moving image. In this example, the electronic device 900 may perform at least one of the VDIS or the OIS.

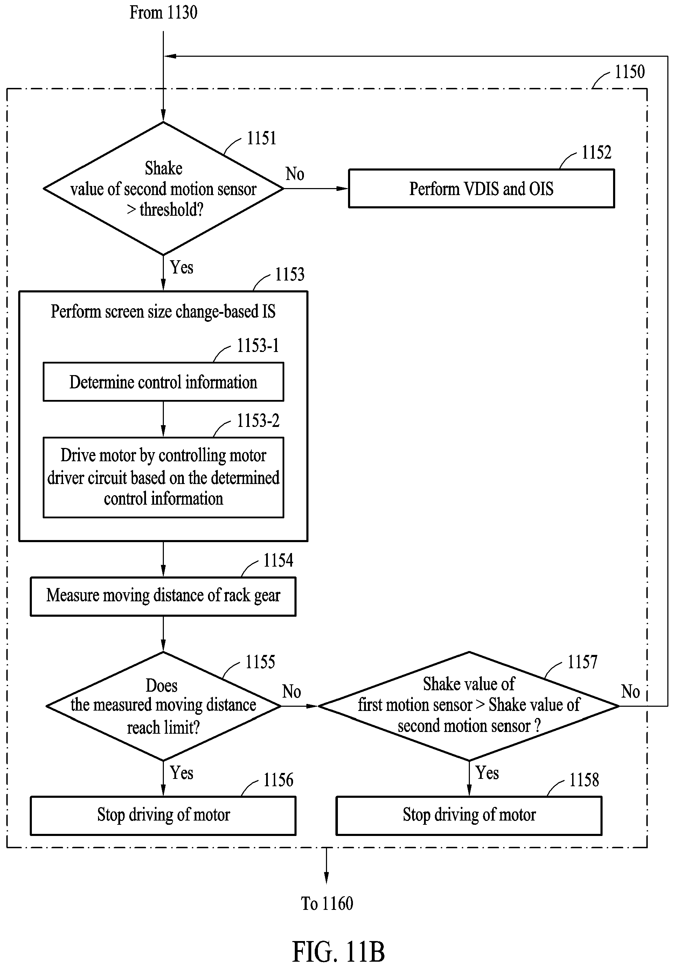

When the electronic device 900 is in the portrait orientation (Yes in operation 1130), the electronic device 900 may perform the "screen size change-based IS" or the VDIS/OIS and perform photographing of a moving image in operation 1150. Operation 1150 will be further described below with reference to FIG. 11B.

Although operation 1130 is performed after operations 1110 and 1120 as shown in FIG. 11A, this is merely an example. In another example, operation 1130 is not limited to being performed after operations 1110 and 1120. Operation 1130 may be performed independently of operations 1110 and 1120.

In an example, photographing of a moving image may be performed in a state in which the electronic device 900 is fixed in the portrait orientation. In this example, the electronic device 900 may not perform operations 1130 and 1140.

When a moving image photographing end event occurs during the photographing of the moving image, the electronic device 900 may terminate the photographing of the moving image in operation 1160. For example, when a user input to a moving image photographing end button is received, the electronic device 900 may terminate the photographing of the moving image. The moving image photographing end event is not limited to the above example.

Hereinafter, an example of operation 1150 is described with reference to FIG. 11B.

Referring to FIG. 11B, in operation 1151, the electronic device 900 may determine whether the shake value (e.g., the y-axis movement value) of the second motion sensor 950 exceeds the threshold (e.g., the lower limit of FIG. 5C). According to an embodiment, in operation 1151, the electronic device 900 may determine whether both the shake value of the first motion sensor 920 and the shake value of the second motion sensor 950 exceed the threshold.

The shake value of the second motion sensor 950 may not exceed the threshold (No in operation 1151). Although not shown in FIG. 11B, the shake value of the first motion sensor 920 may not exceed the threshold. In this case, in operation 1152, the electronic device 900 may perform the VDIS and the OIS. However, the embodiments are not limited thereto, and the electronic device 900 may perform the VDIS or the OIS. When the electronic device 900 does not relatively greatly move, the shake value of the first motion sensor 920 and the shake value of the second motion sensor 950 may not exceed the threshold. In other words, the shake value of the first motion sensor 920 and the shake value of the second motion sensor 950 may be less than the aforementioned predetermined range. In this case, the electronic device 900 may perform at least one of the VDIS or the OIS.

When the shake value of the second motion sensor 950 exceeds the threshold (Yes in operation 1151), the electronic device 900 may perform a "screen size change-based IS" in operation 1153. In an embodiment, when the shake value of the second motion sensor 950 is within the predetermined range, the electronic device 900 may perform the "screen size change-based IS". When the electronic device 900 relatively greatly moves, the shake value of the first motion sensor 920 and the shake value of the second motion sensor 950 may be within the predetermined range, or only the shake value of the second motion sensor 950 may be within the predetermined range. In this case, in operation 1153, the electronic device 900 may perform the "screen size change-based IS". For example, in operation 1153-1, the electronic device 900 may identify a motion direction and the shake value of the second motion sensor 950, and determine control information (e.g., the control information₂₋₂ or the control information₂₋₃) based on the motion direction and the shake value of the second motion sensor 950. In operation 1153-2, the electronic device 900 may drive the motor 940 by controlling the motor driver circuit based on the determined control information. The viewable area (e.g., the viewable area 1001 of FIG. 10A to 10C) may be expanded or retracted in response to the driving of the motor 940.

In operation 1154, the electronic device 900 may measure a moving distance of the rack gear using a slide sensor.

In operation 1155, the electronic device 900 may determine whether the measured moving distance reaches a limit (e.g., a maximum moving distance or a minimum moving distance). In an example, when the viewable area 1001 is expanded, the electronic device 900 may determine whether the measured moving distance reaches the maximum moving distance. When the viewable area 1001 is retracted, the electronic device 900 may determine whether the measured moving distance reaches the minimum moving distance.

When the measured moving distance reaches the limit (Yes in operation 1155), the electronic device 900 may stop driving of the motor 940 in operation 1156. If a degree of shaking of the electronic device 900 increases, a degree of an IS performed in operation 1153 may increase, and accordingly the moving distance of the rack gear may reach the limit. When the measured moving distance reaches the limit, the electronic device 900 may stop the driving of the motor 940 and provide information indicating severe shaking to a user. For example, the electronic device 900 may display a pop-up message indicating severe shaking on the flexible display.

When the measured moving distance does not reach the limit (No in operation 1155), the electronic device 900 may determine whether the shake value of the first motion sensor 920 is greater than the shake value of the second motion sensor 950 in operation 1157. For example, the electronic device 900 may determine whether "the shake value of the first motion sensor 920 > the threshold > the shake value of the second motion sensor 950" is satisfied.

When the shake value of the first motion sensor 920 is greater than the shake value of the second motion sensor 950 (e.g., the shake value of the first motion sensor 920 > the threshold > the shake value of the second motion sensor 950 is satisfied) (Yes in operation 1157), the electronic device 900 may stop the driving of the motor 940 in operation 1158. When a first housing (e.g., the first housing 210 of FIG. 2B, the first housing 310 of FIG. 3, and the first housing 410 of FIG. 4) is gripped, a message indicating that it is impossible to perform the "screen size change-based IS" may be output to a user. For example, when the user grips the first housing (or an upper portion of the electronic device 900 of FIG. 9), the "shake value of the first motion sensor 920 > the threshold > the shake value of the second motion sensor 950" may be satisfied due to shaking of a hand. In this example, the electronic device 900 may output a message indicating that it is impossible to perform the "screen size change-based IS" (or a message indicating not to grip the upper portion of the electronic device 900). In an example, when the "shake value of the first motion sensor 920 > the threshold > the shake value of the second motion sensor 950" is satisfied, the electronic device 900 may estimate (or recognize) an occurrence of a system error, or may estimate (or recognize) that the first motion sensor 920 is shaken due to the driving of the motor 940. In this example, the electronic device 900 may provide information indicating severe shaking to the user. The electronic device 900 may stop the driving of the motor 940 and initialize or reset the motor driver circuit.

When the shake value of the first motion sensor 920 is not greater than the shake value of the second motion sensor 950 (No in operation 1157), the electronic device 900 may repeatedly perform operation 1150.

Although not shown in FIG. 11B, when the "screen size change-based IS" is performed, the shake value of the first motion sensor 920 may not exceed the threshold, and the shake value of the second motion sensor 950 may exceed the threshold. The user may move while gripping a second housing (e.g., a lower portion of FIG. 9), and the shake value of the second motion sensor 950 in the second housing (e.g., the lower portion of FIG. 9) may exceed the threshold even though the "screen size change-based IS" is performed, but the shake value of the first motion sensor 920 may not exceed the threshold. In this case, the electronic device 900 may repeatedly perform the "screen size change-based IS".

Although not shown in FIG. 11B, when the shake value of the second motion sensor 950 is greater than the predetermined range (or when both the shake value of the first motion sensor 920 and the shake value of the second motion sensor 950 are greater than the predetermined range), the electronic device 900 may not perform an IS.

When a moving image photographing end event occurs while operation 1150 is being performed, the electronic device 900 may perform operation 1160.

The embodiments described above with reference to FIGS. 1 to 5C may apply to the electronic device 900 of FIGS. 9 to 11B, and thus a detailed description thereof is omitted.

FIGS. 12 to 16B are diagrams illustrating an IS in a hyperlapse mode of an electronic device according to embodiments.

The hyperlapse mode may be a photographing mode for providing a moving image played back at a high speed by reducing the number of frames per second.

In the hyperlapse mode, as shown in FIG. 12, a shutter of a camera may be opened during an exposure time 1211 within a frame interval 1210, and may be closed for a rest time 1212. The rest time 1212 may also be referred to as a "shutter close time," and photographing may not be performed during the rest time 1212.

According to an embodiment, in an example of FIG. 13A, the electronic device 1300 (e.g., the electronic device 101 of FIG. 1, the electronic device 201 of FIGS. 2A to 2D, the electronic device 301 of FIG. 3, the electronic device 400 of FIG. 4, and the electronic device 500 of FIG. 5A) may set a hyperlapse mode.

According to an embodiment, when the hyperlapse mode is set, or when a user selects a predetermined function (e.g., a gimbal effect function) in the hyperlapse mode, the electronic device 1300 may adjust a length of a viewable area 1301 (e.g., the display area 2610 of FIGS. 2A and 2B, and the viewable area 401 of FIG. 4) of a flexible display of the electronic device 1300 to "L₃₋₁". When a maximum expansion length (or a maximum length of the viewable area 1301) of the flexible display is "Nₘₐₓ", the length L₃₋₁ may be, for example, "Nₘₐₓ/2", but is not limited thereto. For example, the electronic device 1300 may determine control information₃₋₁ (e.g., a moving distance and a moving direction of a rack gear) such that the viewable area 1301 may have the length L₃₋₁, and may drive a motor by controlling a motor driver circuit based on the control information₃₋₁. In response to the driving of the motor, the viewable area 1301 may have the length L₃₋₁.

According to an embodiment, the electronic device 1300 may determine whether the electronic device 1300 is in a portrait orientation. The electronic device 1300 may perform a "screen size change-based IS" when the electronic device 1300 is in the portrait orientation, and may not perform the "screen size change-based IS" when the electronic device 1300 is in a landscape orientation, which will be described below.

Hyperlapse photographing may be started, and a user may move (e.g., walk, or run) during the hyperlapse photographing. Since the user moves, the electronic device 1300 may move (as well).

According to an embodiment, as shown in FIG. 13B, the electronic device 1300 may move in the -y-axis direction during a frame interval (e.g., the frame interval 1210 of FIG. 12). The electronic device 1300 may determine a motion amount and a motion direction (e.g., a shake value (or a movement value) of a gyro sensor in the -y-axis direction) of the electronic device 1300, based on sensing data of the gyro sensor, and may determine whether the determined motion amount is within a predetermined range in which a "screen size change-based IS" is enabled. When the motion amount of the electronic device 1300 is less than the predetermined range during the frame interval, the electronic device 1300 may perform at least one of an OIS or a DIS.

According to an embodiment, when the motion amount of the electronic device 1300 is greater than the predetermined range, the electronic device 1300 may determine that the "screen size change-based IS" is not possible. In this case, the electronic device 1300 may determine that the user is moving that is not correctable (for example, the user continues to move or is moving in a relatively great range that is not correctable), and may not perform the "screen size change-based IS". When the motion amount of the electronic device 1300 is within the predetermined range, the electronic device 1300 may determine that the "screen size change-based IS" is possible. In this case, the electronic device 1300 may temporarily stop photographing and may determine whether the "screen size change-based IS" is possible within the frame interval (or a shutter close time).

According to an embodiment, when the "screen size change-based IS" is possible within the frame interval (or the shutter close time), the electronic device 1300 may perform the "screen size change-based IS". In an embodiment, the electronic device 1300 may determine control information₃₋₂ (e.g., a moving distance and a moving direction of a rack gear) based on the motion amount and the motion direction. To expand the viewable area 1301, the electronic device 1300 may determine a distance at which a rack gear needs to move along the +y-axis. In an example, the electronic device 1300 may search for a moving distance corresponding to a y-axis movement value obtained through the gyro sensor from a table (e.g., Table 2 shown above). To expand the viewable area 1301, the electronic device 1300 may determine the moving distance found from the table as a distance at which the rack gear needs to move along the +y-axis.

According to an embodiment, the electronic device 1300 may drive the motor by controlling the motor driver circuit based on the determined control information₃₋₂.

According to an embodiment, when the "screen size change-based IS" is not possible within the frame interval, the electronic device 1300 may extend the frame interval (or the shutter close time) and perform the "screen size change-based IS".

According to an embodiment, the viewable area 1301 may be expanded through the "screen size change-based IS" as shown in FIG. 13C, and a length L₃₋₂ of the viewable area 1301 of FIG. 13C may be greater than the length L₃₋₁ of the viewable area 1301 of FIG. 13A. Through the "screen size change-based IS", a position of a rear camera shown in FIG. 13A and a position of the rear camera shown in FIG. 13C may be the same on the y-axis.

According to an embodiment, when the frame interval (or the extended frame interval) elapses, the electronic device 1300 may resume photographing, as shown in FIG. 13D.

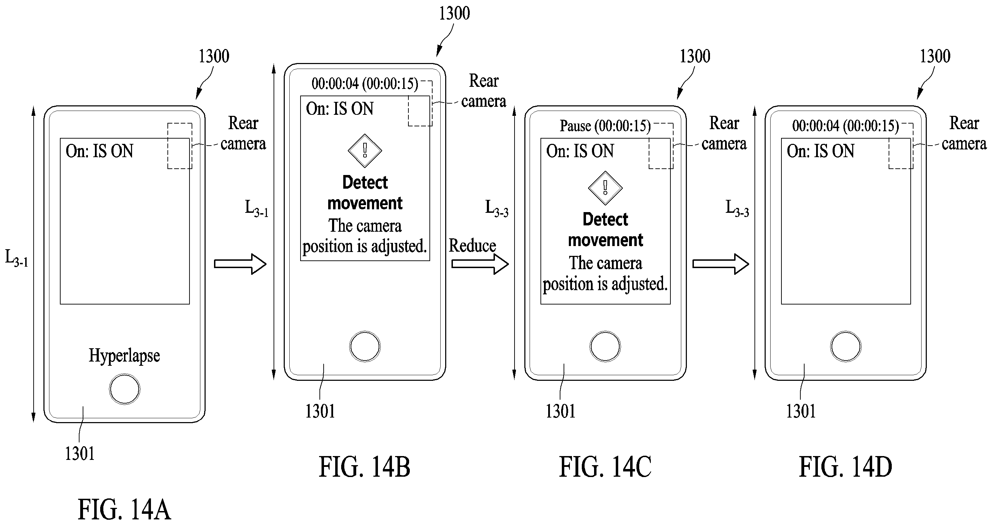

According to an embodiment, when the hyperlapse mode is set, or when a user selects a predetermined function (e.g., a gimbal effect function) in the hyperlapse mode, the electronic device 1300 may adjust the length of the viewable area 1301 (e.g., the display area 2610 of FIGS. 2A and 2B, and the viewable area 401 of FIG. 4) of the flexible display of the electronic device 1300 to "L₃₋₁," as shown in FIG. 14A.

According to an embodiment, as shown in FIG. 14B, the electronic device 1300 may move in the +y-axis direction during a frame interval (e.g., the frame interval 1210 of FIG. 12). The electronic device 1300 may determine a motion amount and a motion direction (e.g., a movement value (or movement amount) of a gyro sensor along the +y-axis) of the electronic device 1300, based on sensing data of the gyro sensor, and may determine whether the motion amount of the electronic device 1300 is within a predetermined range. When the motion amount of the electronic device 1300 is less than the predetermined range during the frame interval, the electronic device 1300 may perform at least one of an OIS or a DIS.

According to an embodiment, when the motion amount of the electronic device 1300 is greater than the predetermined range, the electronic device 1300 may determine that the "screen size change-based IS" is not possible. In this case, the electronic device 1300 may determine that the user is moving that is not correctable (for example, the user continues to move or is moving in a relatively great range that is not correctable), and may not perform the "screen size change-based IS". When the motion amount of the electronic device 1300 is within the predetermined range, the electronic device 1300 may determine that the "screen size change-based IS" is possible. In this case, the electronic device 1300 may temporarily stop photographing and may determine whether the "screen size change-based IS" is possible within the frame interval (or a shutter close time).

According to an embodiment, when the "screen size change-based IS" is possible within the frame interval (or the shutter close time), the electronic device 1300 may perform the "screen size change-based IS". In an embodiment, the electronic device 1300 may determine control information₃₋₃ (e.g., a moving distance and a moving direction of a rack gear) based on the motion amount and the motion direction (e.g., a shake value (or a movement value) of the gyro sensor in the +y-axis direction). To retract the viewable area 1301, the electronic device 1300 may determine a distance at which the rack gear needs to move along the -y-axis. In an example, the electronic device 1300 may search for a moving distance corresponding to a y-axis movement value obtained through the gyro sensor from a table (e.g., Table 2 shown above). To retract the viewable area 1301, the electronic device 1300 may determine the moving distance found from the table as a distance at which the rack gear needs to move along the -y-axis.

The electronic device 1300 may drive the motor by controlling the motor driver circuit based on the determined control information₃₋₃.

According to an embodiment, when the "screen size change-based IS" is not possible within the frame interval (or the shutter close time), the electronic device 1300 may extend the frame interval (or the shutter close time) and perform the "screen size change-based IS".

According to an embodiment, the viewable area 1301 may be retracted through the "screen size change-based IS" as shown in FIG. 14C, and a length₃₋₃ of the viewable area 1301 of FIG. 14C may be less than the length L₃₋₁ of the viewable area 1301 of FIG. 14A. Through the "screen size change-based IS", a position of a rear camera shown in FIG. 14A and a position of the rear camera shown in FIG. 14C may be the same on the y-axis.

According to an embodiment, when the frame interval (or the extended frame interval) elapses, the electronic device 1300 may resume photographing, as shown in FIG. 14D.

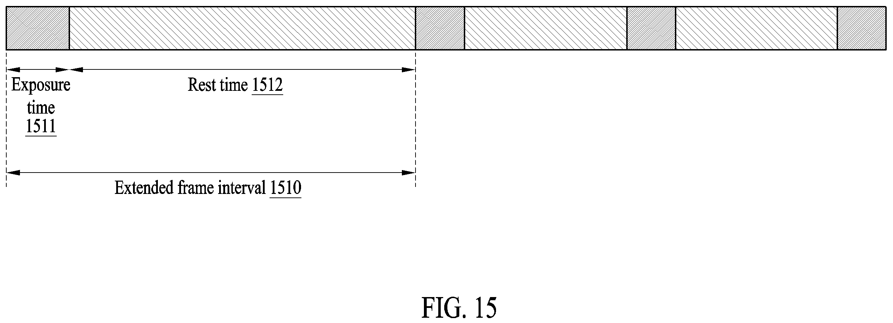

FIG. 15 illustrates an example of an extended frame interval 1510. According to an embodiment, when an expected completion time (e.g., an estimate of a completion time of an expansion (or a retraction) of the viewable area 1301) of the "screen size change-based IS" is determined to exceed a frame interval (e.g., the frame interval 1210 of FIG. 12), the electronic device 1300 may extend the frame interval 1210 (or the shutter close time 1212) based on the expected completion time of the "screen size change-based IS". The shutter close time 1212 of FIG. 12 may be extended to a shutter close time 1512 of FIG. 15.

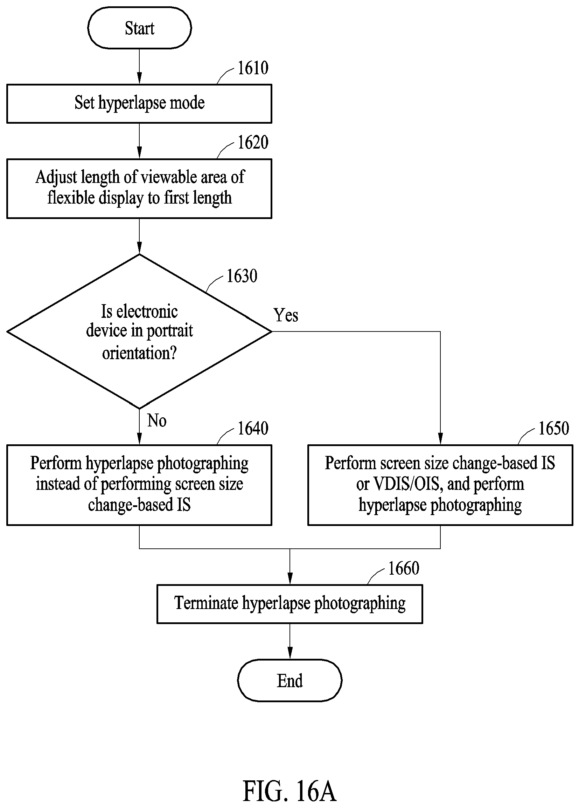

FIG. 16A illustrates an example of an IS of the electronic device 1300 during hyperlapse photographing.

In operation 1610, the electronic device 1300 may set the hyperlapse mode.

In operation 1620, the electronic device 1300 may adjust the length of the viewable area 1301 of the flexible display to a first length (e.g., the length L₃₋₁ of FIGS. 13A and 14A).

According to embodiments, operation 1620 may be omitted.

In operation 1630, the electronic device 1300 may determine whether the electronic device 1300 is in the portrait orientation. In an example, the electronic device 1300 may perform operation 1620 when the electronic device 1300 is in the portrait orientation, and may not perform operation 1620 when the electronic device 1300 is in the landscape orientation.

For example, when the electronic device 1300 is not in the portrait orientation (e.g., when the electronic device 1300 is in the landscape orientation) (No in operation 1630), the electronic device 1300 may perform hyperlapse photographing instead of performing the "screen size change-based IS" in operation 1640. In other words, when the electronic device 1300 is in the landscape orientation, the electronic device 1300 may not perform the "screen size change-based IS" during the hyperlapse photographing.

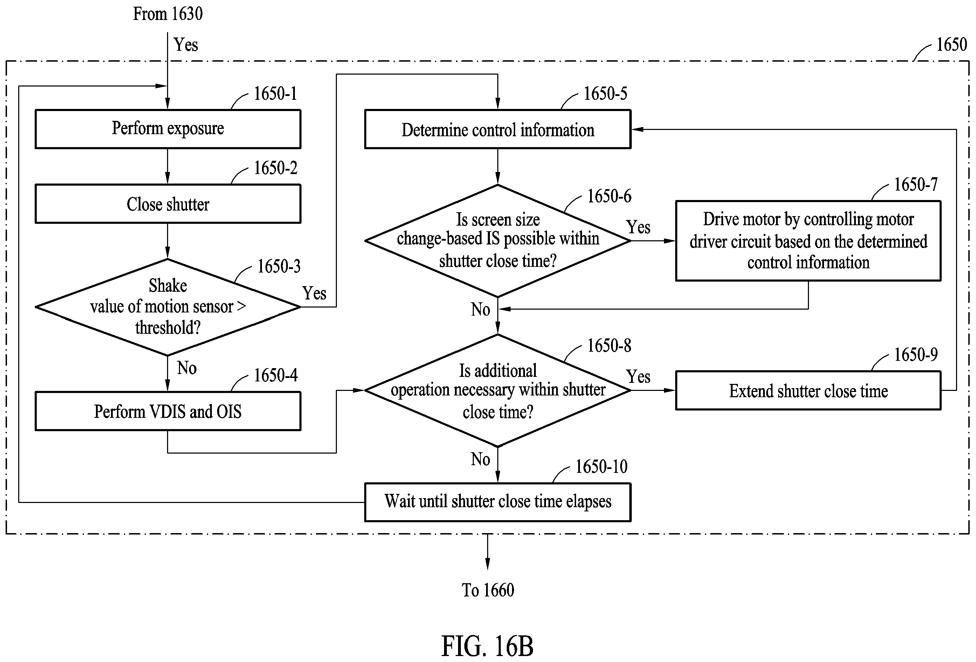

When the electronic device 1300 is in the portrait orientation (Yes in operation 1630), the electronic device 1300 may perform the "screen size change-based IS" or VDIS/OIS, and perform hyperlapse photographing in operation 1650. Operation 1650 will be further described below with reference to FIG. 16B.

Although operation 1630 is performed after operations 1610 and 1620 as shown in FIG. 16A, this is merely an example. In another example, operation 1630 is not limited to being performed after operations 1610 and 1620. Operation 1630 may be performed independently of operations 1610 and 1620.

In an example, hyperlapse photographing may be performed in a state in which the electronic device 1300 is fixed in the portrait orientation. In this example, the electronic device 1300 may not perform operations 1630 and 1640.

When a hyperlapse end event occurs during the hyperlapse photographing, the electronic device 1300 may terminate the hyperlapse photographing in operation 1660. In an example, when a user input to a hyperlapse end button is received, the electronic device 1300 may terminate the hyperlapse photographing. The hyperlapse end event is not limited to the above example.

An example of operation 1650 is described with reference to FIG. 16B.

Referring to FIG. 16B, in operation 1650-1, the electronic device 1300 may perform an exposure by opening the shutter of the camera. The electronic device 1300 may perform the exposure during the exposure time of the frame interval (e.g., the frame interval 1210 of FIG. 12).

When the exposure time of the frame interval 1210 elapses, the electronic device 1300 may close the shutter of the camera in operation 1650-2. The shutter of the camera may remain closed during the shutter close time (e.g., the shutter close time 1212 of FIG. 12).

In operation 1650-3, the electronic device 1300 may determine whether the shake value (e.g., the y-axis movement value) of the motion sensor (e.g., a gyro sensor or the first motion sensor 920) exceeds the threshold (e.g., the lower limit of FIG. 5C).

When the shake value (e.g., the y-axis movement value) of the motion sensor does not exceed the threshold (No in operation 1650-3), the electronic device 1300 may perform a VDIS and an OIS in operation 1650-4. An example in which the shake value (e.g., the y-axis movement value) of the motion sensor does not exceed the threshold may indicate that the motion amount of the electronic device 500 described with reference to FIGS. 5A and 5B is less than a predetermined range.

When the shake value of the motion sensor exceeds the threshold (Yes in operation 1650-3), the electronic device 1300 may determine control information (e.g., the control information₃₋₂ or the control information₃₋₃) in operation 1650-5. In an embodiment, when the shake value of the motion sensor is within a predetermined range, the electronic device 1300 may determine the control information (e.g., the control information₃₋₂ or the control information₃₋₃).

In operation 1650-6, the electronic device 1300 may determine whether it is possible to correct a motion of the electronic device 1300 through the "screen size change-based IS" within the shutter close time.

When the "screen size change-based IS" is possible within the shutter close time (Yes in operation 1650-6), the electronic device 1300 may drive the motor by controlling the motor driver circuit based on the determined control information in operation 1650-7.

When the "screen size change-based IS" is not possible within the shutter close time (No in operation 1650-6), the electronic device 1300 may determine whether an additional operation is necessary within the shutter close time in operation 1650-8. The additional operation may include, for example, an operation of additionally performing a "screen size change-based IS" when it is difficult to complete the "screen size change-based IS" within the shutter close time.

When the additional operation is necessary within the shutter close time (Yes in operation 1650-8), the electronic device 1300 may extend the shutter close time in operation 1650-9. When the shutter close time is extended, the electronic device 1300 may perform operations 1650-5 and 1650-6.

When the additional operation is not necessary within the shutter close time (No in operation 1650-8), the electronic device 1300 may wait until the shutter close time (or the frame interval) elapses in operation 1650-10. In an example, when the "screen size change-based IS" is completed within the shutter close time (or an extended shutter close time), the electronic device 1300 may perform operation 1650-10.

When the shutter close time elapses, the electronic device 1300 may repeatedly perform operation 1650.

When a hyperlapse end event occurs while operation 1650 is performed, the electronic device 1300 may perform operation 1660.

Although not shown in FIG. 16B, the shake value of the motion sensor may be greater than a predetermined range. In this case, the electronic device 1300 may not perform an IS.

The embodiments described above with reference to FIGS. 1 to 5C may apply to the electronic device 1300 of FIGS. 12 to 16B, and thus a detailed description thereof is omitted.

According to an embodiment, an electronic device (e.g., the electronic device 500 of FIG. 5A) may include a camera (e.g., the camera 510 of FIG. 5A) configured to perform photographing, a flexible display (e.g., the flexible display 520 of FIG. 5A), a motor (e.g., the motor 530 of FIG. 5A) configured to expand or retract the flexible display (e.g., through a rotation (caused by the motor)), a motor driver circuit (e.g., the motor driver circuit 540 of FIG. 5A) configured to control the motor (e.g., for the rotation of or caused by the motor), and a processor electrically connected with the camera (510), the flexible display (520); and the motor driver circuit (540). The processor (e.g., the processor 550 of FIG. 5A) configured to a direction and a movement value in which the electronic device moves when there is a shake of the electronic device, determine whether the determined movement value is within a predetermined range, determine control information for controlling the motor driver circuit based on the determined movement value and the determined direction when the determined movement value is within the predetermined range, and control the motor driver circuit based on the determined control information so that an image stabilization (IS) is performed based on an expansion or retraction of the flexible display. In other words, the IS is performed by changing the size of the viewable area of the flexible display by using the motor. For example, the motor may be rotatably coupled with a shaft (e.g. a pinion gear) rotatably coupled to means (e.g. a rack gear) for changing a size of the viewable area. That is, the motor may be indirectly coupled to the means of changing the size of the viewable area. The electronic device is capable of performing an image stabilization (IS) by expanding or reducing the flexible display( e.g., a rollable display) during photographing using a camera.

According to an embodiment, the electronic device further comprise a motion sensor configured to sense a movement of the electronic device, and the processor may be configured to determine the direction and the movement value using the motion sensor.

According to an embodiment, the processor may be configured to determine first control information for controlling the motor driver circuit so that a viewable area of the flexible display has a first length before the camera starts photographing, and control the motor driver circuit based on the determined first control information.

According to an embodiment, the processor may be configured to, when the direction is determined as a first direction, allow viewable area (401) to be retracted based on the determined movement value and the first direction; and when the direction is determined as a second direction, allow the viewable area to be expanded based on the determined movement value and the second direction. In other words, the processor may be configured to, when the motion direction is determined as a first direction, control the motor to retract the viewable area (reducing the size thereof) based on the determined motion amount and the first direction; and when the motion direction is determined as a second direction, control the motor to expand the viewable area (increasing the size thereof) based on the determined motion amount and the second direction. Accordingly, the IS may be performed in two opposite directions.

According to an embodiment, a lens of the camera may move downwards in response to the viewable area being retracted, and may move upwards in response to the viewable area expanding. For example, the position of the lens may correspond with the position of one of the first and second housings. In other words, the lens may be fixedly coupled to one of the first and second housings. Since the first and second housings are slidable to each other in order to change the size of the viewable area, the position of the lens may be adjusted by adjusting the viewable area.

According to an embodiment, the processor may be configured to control such that at least one of a digital image stabilization (DIS) or an optical image stabilization (OIS) is performed when the determined movement value is less than the predetermined range.

According to an embodiment, the processor may be configured to set a panorama photographing mode as a photographing mode of the electronic device according to a user input, determine whether a FOV of the camera is out of a guideline (e.g., the guideline 610 of FIG. 6B) during the photographing with the camera in the panorama photographing mode, and determine the movement value based on a degree by which the FOV is out of the guideline when it is determined that the FOV is out of the guideline. Accordingly, a degree of the deviation of the FOV from the guideline can be determined to be used as a correction parameter for performing IS.

According to an embodiment, the processor may be configured to analyze a length (e.g., the length 720 of FIG. 7A or the length 730 of FIG. 7B) corresponding to the degree by which the FOV is out of the guideline, and determine the movement value based on the analyzed length.

According to an embodiment, the electronic device may further include a first motion sensor (e.g., the first motion sensor 920 of FIG. 9) configured to sense a movement of the electronic device and a second motion sensor (e.g., the second motion sensor 2 950 of FIG. 9) configured to sense a movement of the electronic device. The processor may be configured to set a moving image photographing mode as a photographing mode of the electronic device according to a user input, determine a first movement value (e.g., the shake value of the first motion sensor 920) of the electronic device based on sensing data of the first motion sensor during the photographing with the camera in the moving image photographing mode, determine a second movement value (e.g., the shake value of the second motion sensor 950) of the electronic device based on sensing data of the second motion sensor, determine whether the determined second movement value is within the predetermined range, determine the control information based on the determined direction and the determined second movement value when the determined second movement value is within the predetermined range, and allow at least one of a DIS or an OIS to be performed when each of the determined first movement value and the determined second movement value is less than the predetermined range. In other words, the processor may be configured to perform allow at least one of a DIS or an OIS when each of the determined first motion amount and the determined second motion amount is less than the predetermined range.

According to an embodiment, the processor may be configured to set a hyperlapse mode as a photographing mode of the electronic device according to a user input, determine whether the determined movement value is a movement value for which the IS is possible during a frame interval in the hyperlapse mode, determine whether the IS is possible within the frame interval when the determined movement value is determined to be the movement value for which the IS is possible, and control the motor driver circuit based on the determined control information when it is determined that the IS is possible within the frame interval. Hyperlapse modes provide unused frame intervals which may be used for IS without substantially affecting frame intervals used for exposure.

According to an embodiment, the processor may be configured to extend the frame interval, when it is determined that the IS is not possible within the frame interval. Hereby, a chance of a possibility of IS can be increased.

According to an embodiment, the processor may be configured to, when the determined movement value is less than the predetermined range, allow at least one of a DIS or an OIS to be performed (or perform at least one of a DIS or an OIS), and when the determined movement value is greater than the predetermined range, not perform the IS, the DIS, and OIS. Not performing the IS, the DIS and OIS may be referred to deactivating the IS, the DIS and OIS or keeping the IS, the DIS and OIS deactivated.

According to an embodiment, an electronic device may include a camera configured to perform photographing, a flexible display, a motor configured to change a size of a viewable area of the flexible display (e.g., through a rotation), a motor driver circuit configured to control the motor (e.g., for the rotation of the motor), and a processor configured to determine first control information so that the viewable area has a first length before the camera starts photographing, control the motor driver circuit based on the determined first control information, determine a direction and a movement value in which the electronic device moves when there is a shake of the electronic device during the photographing with the camera, determine whether the determined movement value is within a predetermined range, when the determined movement value is determined to be within the predetermined range and when the direction is determined as a first direction, determine second control information based on the first direction and the determined movement value so that the viewable area is retracted, control the motor driver circuit based on the determined second control information, when the direction is determined as a second direction, determine third control information based on the determined movement value and the second direction so that the viewable area expands, and control the motor driver circuit based on the determined third control information.

According to an embodiment, a lens of the camera may move downwards in response to the viewable area being retracted, and may move upwards in response to the viewable area expanding.

According to an embodiment, the processor may be configured to set a panorama photographing mode as a photographing mode of the electronic device according to a user input, determine whether a FOV of the camera is out of a guideline during the photographing with the camera in the panorama photographing mode, and determine the movement value based on a degree by which the FOV is out of the guideline when it is determined that the FOV is out of the guideline.

According to an embodiment, the processor may be configured to analyze a length corresponding to the degree by which the FOV is out of the guideline, and determine the movement value based on the analyzed length.

According to an embodiment, the electronic device may further include a first motion sensor and a second motion sensor. The processor may be configured to set a moving image photographing mode as a photographing mode of the electronic device according to a user input, determine a first movement value of the electronic device based on sensing data of the first motion sensor during the photographing with the camera in the moving image photographing mode, determine a second movement value of the electronic device based on sensing data of the second motion sensor, determine whether each of the determined first movement value and the determined second movement value exceeds a threshold, allow (or control) the IS(e.g., a "screen size change-based IS") to be performed when the determined second movement value exceeds the threshold, and allow at least one of a DIS or an OIS to be performed when each of the determined first movement value and the determined second movement value is less than or equal to the threshold.

According to an embodiment, the processor may be configured to set a hyperlapse mode as a photographing mode of the electronic device according to a user input, determine whether the determined movement value is a movement value for which an IS (e.g., a "screen size change-based IS") is possible during a frame interval in the hyperlapse mode, determine whether the IS is possible within the frame interval when the determined movement value is determined to be the movement value for which the IS is possible, and allow (or control) the IS to be performed when it is determined that the IS is possible within the frame interval.

According to an embodiment, the processor may be configured to extend the frame interval, when it is determined that the IS is not possible within the frame interval.

According to an embodiment, the processor may be configured to, when the determined movement value is less than the predetermined range, allow (or control) at least one of a DIS or an OIS to be performed, and when the determined movement value is greater than the predetermined range, not perform the IS, the DIS, and OIS.

According to an embodiment, a method of operating an electronic device may include performing photographing using a camera, determining a direction and a movement value in which the electronic device moves when there is a shake of the electronic device during the photographing with the camera, determining whether the determined movement value is within a predetermined range; determining control information for controlling a motor driver circuit based on the determined movement value and the determined direction when the determined movement value is within the predetermined range, the motor being configured to expand or retract a flexible display (e.g., through a rotation), and controlling a motor driver circuit based on the determined control information so that an IS is performed based on an expansion or retraction of the flexible display. The optional features and their advantages described in view of the electronic device may analogously apply to the method. A recurrent description thereof is thus omitted.

According to an embodiment, the method may further comprise the step of performing at least one of a DIS or an OIS, when the determined movement value is less than the predetermined range.

According to an embodiment, the determining of the control information may include, when the direction is determined as a first direction, determining control information for a retraction of a viewable area of the flexible display based on the determined movement value and the first direction; and when the direction is determined as a second direction, determining control information for an expansion of the viewable area based on the determined movement value and the second direction.

According to an embodiment, the method may further comprise the step of controlling such that a viewable area of the flexible display has a first length before the camera starts photographing.

## Claims

1. An electronic device (500), comprising:
a housing including a first housing part (210) and a second housing part (220) configured to movably engage with the first housing part (210), wherein, based on a movement of the second housing part (220), a state of the electronic device (500) is changed between a first state in which the electronic device (500) is retracted and a second state in which the electronic device (500) is extended;
a camera (510) configured to perform photographing, wherein the camera is fixedly coupled to the second housing part such that movement of the second housing part causes a corresponding displacement of the camera;
a flexible display (520), wherein a size of an area of the flexible display (520) that is visible from a front side of the electronic device (500) as the state of the electronic device (500) is changed between the first state and the second state;
a motor (530) configured to move the second housing part (220) with respect to the first housing part (210);
a motor driver circuit (540) configured to control the motor (530);
memory (130) storing instructions; and
a processor (550) electrically connected with the camera (510), the flexible display (520), and the motor driver circuit (540),
wherein the instructions, when executed by the processor (550), cause the electronic device (500) to:
during the photographing with the camera (510), determine a direction of motion the electronic device (500) and an amount of the motion of the electronic device (500),
determine whether the determined amount of the motion is within a predetermined range,
when the determined amount of the motion is less than the predetermined range, perform at least one of a digital image stabilization, DIS, or an optical image stabilization, OIS, and
when the determined amount of the motion is within the predetermined range and when the determined direction of the motion is a first direction, retract the flexible display (520) by driving the motor (530) using the motor driver circuit (540), and when the determined amount of the motion is within the predetermined range and when the determined direction of the motion is a second direction, expand the flexible display (520) by driving the motor (530) using the motor driver circuit (540),
wherein the first and second directions are opposite directions along an axis along which the electronic device is expanded or retracted.

2. The electronic device (500) of claim 1, further comprising a motion sensor configured to sense the motion of the electronic device (500), and
wherein the instructions, when executed by the processor (550), cause the electronic device (500) to determine the direction of the motion and the amount of the motion using the motion sensor.

3. The electronic device (500) of any one of the preceding claims, wherein instructions, when executed by the processor (550), cause the electronic device (500) to:
determine a distance at which a rack gear electronic device (500) is to move and a direction in which the rack gear is to move, based on the determined amount of the motion and the determined direction of the motion.

4. The electronic device (500) of any one of the preceding claims, wherein instructions, when executed by the processor (550), cause the electronic device (500) to:
set a panorama photographing mode as a photographing mode of the electronic device (500) according to a user input;
determine whether a field of view, FOV, of the camera (510) is out of a guideline (610) during the photographing with the camera (510) in the panorama photographing mode; and
determine the amount of the motion based on a degree by which the FOV is out of the guideline (610) when it is determined that the FOV is out of the guideline (610).

5. The electronic device (500) of claim 4, wherein the instructions, when executed by the processor (550), cause the electronic device (500) to:
analyze a length (720, 730) corresponding to the degree by which the FOV is out of the guideline (610); and
determine the amount of the motion value based on the analyzed length (720, 730).

6. The electronic device (500) of any one of the preceding claims, further comprising:
a first motion sensor (920) configured to sense the motion of the electronic device (500); and
a second motion sensor (950) configured to sense the motion of the electronic device (500),
wherein the instructions, when executed by the processor (550), cause the electronic device (500) to:
set a moving image photographing mode as a photographing mode of the electronic device (500) according to a user input;
determine a first value of an amount of the motion of the electronic device (500) based on sensing data of the first motion sensor (920) during the photographing with the camera (510) in the moving image photographing mode;
determine a second value of an amount of the motion of the electronic device (500) based on sensing data of the second motion sensor (950);
determine whether the determined second value is within the predetermined range;
retract the flexible display (520) when the determined second value is within the predetermined range and when the determined direction of the motion is the first direction, and expand the flexible display (520) when the determined second value is within the predetermined range and when the determined direction of the motion is the second direction; and
perform at least one of the DIS or the OIS when each of the determined first value and the determined second value is less than the predetermined range.

7. The electronic device (500) of any one of the preceding claims, wherein the instructions, when executed by the processor (550), cause the electronic device (500) to:
set a hyperlapse mode as a photographing mode of the electronic device (500) according to a user input;
determine whether the determined amount of the motion is within the predetermined range during a frame interval (1210) in the hyperlapse mode; and
in the hyperlapse mode, when the determined amount of the motion is within the predetermined range and when the determined direction of the motion is the first direction, retract the flexible display (520), and when the determined amount of the motion is within the predetermined range and when the determined direction of the motion is the second direction, expand the flexible display (520).

8. The electronic device (500) of claim 7, wherein the instructions, when executed by the processor (550), cause the electronic device (500) to extend the frame interval (1210), when it is determined that the retraction of the flexible display (520) and the expansion of the flexible display (520) is not possible within the frame interval (1210).

9. A method of operating the electronic device (500) of claim 1, the method comprising:
performing (501) photographing using the camera (510);
determining (503) a direction of motion of the electronic device (500) and an amount of the motion of the electronic device (500) during the photographing with the camera (510);
determining (505) whether the determined amount of the motion is within a predetermined range;
**characterized in that**
when the determined amount of the motion is less than the predetermined range, performing at least one of a digital image stabilization, DIS, or an optical image stabilization, OIS; and
when the determined amount of the motion is within the predetermined range and when the determined direction of the motion is a first direction, retracting the flexible display (520) by driving a motor (530) using a motor driver circuit (540), and when the determined amount of the motion is within the predetermined range and when the determined direction of the motion is a second direction, expanding the flexible display (520) by driving the motor (530) using the motor driver circuit (540), wherein the first and second directions are opposite directions along an axis along which the electronic device is expanded or retracted.

10. The method of claim 9, further comprising:
determining a distance at which a rack gear of the electronic device (500) is to move and a direction in which the rack gear is to move, based on the determined amount of the motion and the determined direction of the motion.

## Patentansprüche

1. Elektronisches Gerät (500), umfassend:
ein Gehäuse mit einem ersten Gehäuseteil (210) und einem zweiten Gehäuseteil (220), das so konfiguriert ist, dass es beweglich mit dem ersten Gehäuseteil (210) in Eingriff kommt, wobei basierend auf einer Bewegung des zweiten Gehäuseteils (220) sich ein Zustand des elektronischen Geräts (500) zwischen einem ersten Zustand, in dem das elektronische Gerät (500) eingefahren ist, und einem zweiten Zustand, in dem das elektronische Gerät (500) ausgefahren ist, ändert;
eine Kamera (510), die dazu konfiguriert ist, eine fotografische Aufnahme durchzuführen, wobei die Kamera fest mit dem zweiten Gehäuseteil gekoppelt ist, so dass eine Bewegung des zweiten Gehäuseteils eine entsprechende Verschiebung der Kamera bewirkt;
eine flexible Anzeige (520), wobei sich die Größe eines Bereichs der flexiblen Anzeige (520), der von einer Vorderseite des elektronischen Geräts (500) aus sichtbar ist, ändert, wenn sich der Zustand des elektronischen Geräts (500) zwischen dem ersten Zustand und dem zweiten Zustand ändert;
einen Motor (530), der zum Bewegen des zweiten Gehäuseteils (220) in Bezug auf das erste Gehäuseteil (210) konfiguriert ist;
eine Motortreiberschaltung (540), die zum Steuern des Motors (530) konfiguriert ist;
einen Speicher (130), in dem Befehle gespeichert sind; und
einen Prozessor (550), der elektrisch mit der Kamera (510), der flexiblen Anzeige (520) und der Motortreiberschaltung (540) verbunden ist,
wobei die Befehle, wenn sie vom Prozessor (550) ausgeführt werden, das elektronische Gerät (500) dazu veranlassen,
während der fotografischen Aufnahme mit der Kamera (510) eine Bewegungsrichtung des elektronischen Geräts (500) und einen Bewegungsbetrag des elektronischen Geräts (500) zu bestimmen,
festzustellen, ob der bestimmte Bewegungsbetrag innerhalb eines vorbestimmten Bereichs liegt,
wenn der bestimmte Bewegungsbetrag kleiner als der vorbestimmte Bereich ist, mindestens eine von einer digitalen Bildstabilisierung (kurz: DIS) und einer optischen Bildstabilisierung (kurz: OIS) durchzuführen, und
wenn der bestimmte Bewegungsbetrag innerhalb des vorbestimmten Bereichs liegt und die bestimmte Bewegungsrichtung eine erste Richtung ist, die flexible Anzeige (520) durch Ansteuern des Motors (530) unter Verwendung der Motortreiberschaltung (540) einzufahren, und wenn der bestimmte Bewegungsbetrag innerhalb des vorbestimmten Bereichs liegt und die bestimmte Bewegungsrichtung eine zweite Richtung ist, die flexible Anzeige (520) durch Ansteuern des Motors (530) unter Verwendung der Motortreiberschaltung (540) auszufahren,
wobei die erste und die zweite Richtung entgegengesetzte Richtungen entlang einer Achse sind, entlang der das elektronische Gerät ausgefahren oder eingefahren wird.

2. Elektronisches Gerät (500) nach Anspruch 1, umfassend ferner einen Bewegungssensor, der dazu konfiguriert ist, die Bewegung des elektronischen Geräts (500) zu erfassen, und
wobei die Befehle, wenn sie vom Prozessor (550) ausgeführt werden, das elektronische Gerät (500) dazu veranlassen, die Bewegungsrichtung und den Bewegungsbetrag unter Verwendung des Bewegungssensors zu bestimmen.

3. Elektronisches Gerät (500) nach einem der vorstehenden Ansprüche, wobei Befehle, wenn sie vom Prozessor (550) ausgeführt werden, das elektronische Gerät (500) dazu veranlassen,
eine Entfernung, um die sich ein Zahnstangengetriebe des elektronischen Geräts (500) bewegen soll, und eine Richtung, in die sich das Zahnstangengetriebe bewegen soll, auf der Grundlage des bestimmten Bewegungsbetrags und der bestimmten Bewegungsrichtung zu bestimmen.

4. Elektronisches Gerät (500) nach einem der vorstehenden Ansprüche, wobei Befehle, wenn sie vom Prozessor (550) ausgeführt werden, das elektronische Gerät (500) dazu veranlassen,
einen Panorama-Aufnahmemodus als Aufnahmemodus des elektronischen Geräts (500) gemäß einer Benutzereingabe einzustellen;
festzustellen, ob ein Sichtfeld (kurz: FOV) der Kamera (510) während der fotografischen Aufnahme mit der Kamera (510) im Panorama-Aufnahmemodus außerhalb einer Richtlinie (610) liegt; und
den Bewegungsbetrag auf der Grundlage eines Grades, um den das FOV außerhalb der Richtlinie (610) liegt, zu bestimmen, wenn festgestellt wird, dass das FOV außerhalb der Richtlinie liegt (610) liegt.

5. Elektronisches Gerät (500) nach Anspruch 4, wobei die Befehle, wenn sie vom Prozessor (550) ausgeführt werden, das elektronische Gerät (500) dazu veranlassen,
eine Länge (720, 730) zu analysieren, die dem Grad entspricht, um den das FOV außerhalb der Richtlinie (610) liegt; und
den Betrag des Bewegungswerts auf der Grundlage der analysierten Länge (720, 730) zu bestimmen.

6. Elektronisches Gerät (500) nach einem der vorstehenden Ansprüche, umfassend ferner:
einen ersten Bewegungssensor (920), der dazu konfiguriert ist, die Bewegung des elektronischen Geräts (500) zu erfassen; und
einen zweiten Bewegungssensor (950), der dazu konfiguriert ist, die Bewegung des elektronischen Geräts (500) zu erfassen,
wobei die Befehle, wenn sie vom Prozessor (550) ausgeführt werden, das elektronische Gerät (500) dazu veranlassen,
einen Bewegtbildaufnahmemodus als Aufnahmemodus des elektronischen Geräts (500) gemäß einer Benutzereingabe einzustellen;
einen ersten Wert des Bewegungsbetrags des elektronischen Geräts (500) auf der Grundlage von Erfassungsdaten des ersten Bewegungssensors (920) während der fotografischen Aufnahme mit der Kamera (510) im Bewegtbildaufnahmemodus zu bestimmen;
einen zweiten Wert des Bewegungsbetrags des elektronischen Geräts (500) auf der Grundlage von Erfassungsdaten des zweiten Bewegungssensors (950) zu bestimmen;
festzustellen, ob der bestimmte zweite Wert innerhalb des vorbestimmten Bereichs liegt;
die flexible Anzeige (520) einzufahren, wenn der bestimmte zweite Wert innerhalb des vorbestimmten Bereichs liegt und die bestimmte Bewegungsrichtung die erste Richtung ist, und die flexible Anzeige (520) auszufahren, wenn der bestimmte zweite Wert innerhalb des vorbestimmten Bereichs liegt und die bestimmte Bewegungsrichtung die zweite Richtung ist; und
mindestens eine von der DIS und der OIS durchzuführen, wenn sowohl der bestimmte erste Wert als auch der bestimmte zweite Wert kleiner als der vorbestimmte Bereich sind.

7. Elektronisches Gerät (500) nach einem der vorstehenden Ansprüche, wobei die Befehle, wenn sie vom Prozessor (550) ausgeführt werden, das elektronische Gerät (500) dazu veranlassen,
einen Hyperlapse-Modus als Aufnahmemodus des elektronischen Geräts (500) gemäß einer Benutzereingabe einzustellen;
feststellen, ob der bestimmte Bewegungsbetrag während eines Bildintervalls (1210) im Hyperlapse-Modus innerhalb des vorbestimmten Bereichs liegt; und
im Hyperlapse-Modus, wenn der bestimmte Bewegungsbetrag innerhalb des vorbestimmten Bereichs liegt und die bestimmte Bewegungsrichtung die erste Richtung ist, die flexible Anzeige (520) einzufahren, und wenn der bestimmte Bewegungsbetrag innerhalb des vorbestimmten Bereichs liegt und die bestimmte Bewegungsrichtung die zweite Richtung ist, die flexible Anzeige (520) auszufahren.

8. Elektronisches Gerät (500) nach Anspruch 7, wobei die Befehle, wenn sie vom Prozessor (550) ausgeführt werden, das elektronische Gerät (500) dazu veranlassen, das Bildintervall (1210) zu verlängern, wenn festgestellt wird, dass das Einfahren der flexiblen Anzeige (520) und das Ausfahren der flexiblen Anzeige (520) innerhalb des Bildintervalls (1210) nicht möglich sind.

9. Verfahren zum Betreiben des elektronischen Geräts (500) nach Anspruch 1, wobei das Verfahren Folgendes umfasst:
Durchführen (501) einer fotografischen Aufnahme unter Verwendung der Kamera (510);
Bestimmen (503) einer Bewegungsrichtung des elektronischen Geräts (500) und eines Bewegungsbetrags des elektronischen Geräts (500) während der fotografischen Aufnahme mit der Kamera (510);
Feststellen (505), ob der bestimmte Bewegungsbetrag innerhalb eines vorbestimmten Bereichs liegt;
**dadurch gekennzeichnet, dass**
wenn der bestimmte Bewegungsbetrag kleiner als der vorbestimmte Bereich ist, mindestens eine von einer digitalen Bildstabilisierung (kurz: DIS) und einer optischen Bildstabilisierung (kurz: OIS) durchgeführt wird; und
wenn der bestimmte Bewegungsbetrag innerhalb des vorbestimmten Bereichs liegt und die bestimmte Bewegungsrichtung eine erste Richtung ist, die flexible Anzeige (520) durch Ansteuern eines Motors (530) unter Verwendung einer Motortreiberschaltung (540) eingefahren wird, und wenn der bestimmte Bewegungsbetrag innerhalb des vorbestimmten Bereichs liegt und die bestimmte Bewegungsrichtung eine zweite Richtung ist, die flexible Anzeige (520) durch Ansteuern des Motors (530) unter Verwendung der Motortreiberschaltung (540) ausgefahren wird, wobei die erste und die zweite Richtung entgegengesetzte Richtungen entlang einer Achse sind, entlang der das elektronische Gerät ausgefahren oder eingefahren wird.

10. Verfahren nach Anspruch 9, umfassend ferner:
Bestimmen einer Entfernung, um die sich ein Zahnstangengetriebe des elektronischen Geräts (500) bewegen soll, und einer Richtung, in die sich das Zahnstangengetriebe bewegen soll, basierend auf dem bestimmten Bewegungsbetrag und der bestimmten Bewegungsrichtung.

## Revendications

1. Dispositif électronique (500), comprenant :
un boîtier comportant une première portion de boîtier (210) et une seconde portion de boîtier (220) configurée pour s'engager de manière mobile avec la première portion de boîtier (210), sur la base d'un mouvement de la seconde portion de boîtier (220), un état du dispositif électronique (500) se changeant entre un premier état dans lequel le dispositif électronique (500) est rétracté et un second état dans lequel dispositif électronique (500) est étendu ;
une caméra (510) configurée pour effectuer une photographie, la caméra étant couplée de manière fixe à la seconde portion de boîtier de sorte que le mouvement de la seconde portion de boîtier provoque un déplacement correspondant de la caméra ;
un afficheur flexible (520), une taille d'une zone de l'afficheur flexible (520) visible depuis un côté avant du dispositif électronique (500) comme l'état du dispositif électronique (500) se changeant entre le premier état et le deuxième état ;
un moteur (530) configuré pour déplacer la seconde portion de boîtier (220) par rapport à la première portion de boîtier (210) ;
un circuit d'entraînement de moteur (540) configuré pour commander le moteur (530) ;
une mémoire (130) stockant des instructions ; et
un processeur (550) connecté électriquement à la caméra (510), à l'afficheur flexible (520) et au circuit d'entraînement de moteur (540),
dans lequel les instructions, lorsqu'elles sont exécutées par le processeur (550), amènent le dispositif électronique (500) à :
lors de la photographie avec la caméra (510), déterminer une direction de mouvement du dispositif électronique (500) et une quantité de mouvement du dispositif électronique (500),
déterminer si la quantité de mouvement déterminée se trouve dans une plage prédéterminée,
lorsque la quantité de mouvement déterminée est inférieure à la plage prédéterminée, effectuer au moins une d'une stabilisation d'image numérique, DIS ou d'une stabilisation d'image optique, OIS, et
lorsque la quantité de mouvement déterminée se trouve dans la plage prédéterminée et que la direction de mouvement déterminée est une première direction, rétracter l'afficheur flexible (520) en entraînant le moteur (530) à l'aide du circuit d'entraînement de moteur (540), et lorsque la quantité de mouvement déterminée se trouve dans la plage prédéterminée et que la direction de mouvement déterminée est une seconde direction, étendre l'afficheur flexible (520) en entraînant le moteur (530) à l'aide du circuit d'entraînement de moteur (540),
dans lequel la première direction et la seconde direction sont des directions opposées le long d'un axe le long duquel le dispositif électronique est étendu ou rétracté.

2. Dispositif électronique (500) selon la revendication 1, comprenant en outre un capteur de mouvement configuré pour détecter le mouvement du dispositif électronique (500), et
dans lequel les instructions, lorsqu'elles sont exécutées par le processeur (550), amènent le dispositif électronique (500) à déterminer la direction du mouvement et la quantité du mouvement à l'aide du capteur de mouvement.

3. Dispositif électronique (500) selon l'une quelconque des revendications précédentes, dans lequel les instructions, lorsqu'elles sont exécutées par le processeur (550), amènent le dispositif électronique (500) à :
déterminer une distance de laquelle un dispositif électronique à crémaillère (500) se déplacera et une direction dans laquelle la crémaillère se déplacera, sur la base de la quantité de mouvement déterminée et de la direction de mouvement déterminée.

4. Dispositif électronique (500) selon l'une quelconque des revendications précédentes, dans lequel les instructions, lorsqu'elles sont exécutées par le processeur (550), amènent le dispositif électronique (500) à :
définir un mode de photographie panoramique comme mode de photographie du dispositif électronique (500) en fonction d'une saisie utilisateur ;
déterminer si un champ visuel, FOV, de la caméra (510) dépasse une ligne directrice (610) lors de la photographie avec la caméra (510) en mode de photographie panoramique ; et
déterminer la quantité de mouvement sur la base d'un degré auquel le FOV dépasse la ligne de directrice (610) lorsqu'il est déterminé que le FOV dépasse la ligne directrice (610).

5. Dispositif électronique (500) selon la revendication 4, dans lequel les instructions, lorsqu'elles sont exécutées par le processeur (550), amènent le dispositif électronique (500) à:
analyser une longueur (720, 730) correspondant au degré auquel le FOV dépasse la ligne directrice (610) ; et
déterminer la quantité de la valeur de mouvement en fonction de la longueur (720, 730) analysée.

6. Dispositif électronique (500) selon l'une quelconque des revendications précédentes, comprenant en outre :
un premier capteur de mouvement (920) configuré pour détecter le mouvement du dispositif électronique (500) ; et
un second capteur de mouvement (950) configuré pour détecter le mouvement du dispositif électronique (500),
dans lequel les instructions, lorsqu'elles sont exécutées par le processeur (550), amènent le dispositif électronique (500) à :
définir un mode de photographie d'image en mouvement comme mode de photographie du dispositif électronique (500) en fonction d'une saisie utilisateur ;
déterminer une première valeur d'une quantité de mouvement du dispositif électronique (500) sur la base de données de détection du premier capteur de mouvement (920) lors de la photographie avec la caméra (510) en mode de photographie d'image en mouvement ;
déterminer une seconde valeur d'une quantité de mouvement du dispositif électronique (500) sur la base de données de détection du second capteur de mouvement (950) ;
déterminer si la seconde valeur déterminée se trouve dans la plage prédéterminée ;
rétracter l'afficheur flexible (520) lorsque la seconde valeur déterminée se trouve dans la plage prédéterminée et lorsque la direction de mouvement déterminée est la première direction, et étendre l'afficheur flexible (520) lorsque la seconde valeur déterminée se trouve dans la plage prédéterminée et lorsque la direction de mouvement déterminée est la seconde direction ; et
effectuer au moins une de la DIS ou de la OIS lorsque chacune de la première valeur déterminée et de la seconde valeur déterminée est inférieure à la plage prédéterminée.

7. Dispositif électronique (500) selon l'une quelconque des revendications précédentes, dans lequel les instructions, lorsqu'elles sont exécutées par le processeur (550), amènent le dispositif électronique (500) à :
définir un mode hyperlapse comme mode de photographie du dispositif électronique (500) en fonction d'une saisie utilisateur ;
déterminer si la quantité de mouvement déterminée se trouve dans la plage prédéterminée lors d'un intervalle de trame (1210) en mode hyperlapse ; et
en mode hyperlapse, lorsque la quantité de mouvement déterminée se trouve dans la plage prédéterminée et que la direction de mouvement déterminée est la première direction, rétracter l'afficheur flexible (520), et lorsque la quantité de mouvement déterminée se trouve dans la plage prédéterminée et que la direction de mouvement déterminée est la seconde direction, étendre l'afficheur flexible (520).

8. Dispositif électronique (500) selon la revendication 7, dans lequel les instructions, lorsqu'elles sont exécutées par le processeur (550), amènent le dispositif électronique (500) à étendre l'intervalle de trame (1210), lorsqu'il est détermine que la rétraction de l'afficheur flexible (520) et l'extension de l'afficheur flexible (520) ne sont pas possibles dans l'intervalle de trame (1210).

9. Procédé pour faire fonctionner le dispositif électronique (500) selon la revendication 1, le procédé comprenant :
effectuer (501) une photographie avec la caméra (510) ;
déterminer (503) une direction de mouvement du dispositif électronique (500) et une quantité de mouvement du dispositif électronique (500) lors de la photographie avec la caméra (510) ;
déterminer (505) si la quantité de mouvement déterminée se trouve dans une plage prédéterminée ;
**caractérisé en ce que**,
lorsque la quantité de mouvement déterminée est inférieure à la plage prédéterminée, effectuer au moins une d'une stabilisation d'image numérique, DIS ou d'une stabilisation d'image optique, OIS ; et
lorsque la quantité de mouvement déterminée se trouve dans la plage prédéterminée et que la direction de mouvement déterminée est une première direction, rétracter l'afficheur flexible (520) en entraînant le moteur (530) à l'aide d'un circuit d'entraînement de moteur (540), et lorsque la quantité de mouvement déterminée se trouve dans la plage prédéterminée et que la direction de mouvement déterminée est une seconde direction, étendre l'afficheur flexible (520) en entraînant le moteur (530) à l'aide du circuit d'entraînement de moteur (540), dans lequel la première direction et la seconde direction sont des directions opposées le long d'un axe le long duquel le dispositif électronique est étendu ou rétracté.

10. Procédé selon la revendication 9, comprenant en outre :
déterminer une distance de laquelle un dispositif électronique à crémaillère (500) se déplacera et une direction dans laquelle la crémaillère se déplacera, sur la base de la quantité de mouvement déterminée et de la direction de mouvement déterminée.
